# EUROPEAN PATENT APPLICATION

(11) **EP 4 715 654 A1**
(43) Date of publication of application: **25.03.2026**
(21) Application number: 24830702.7
(22) Date of filing: 24.06.2024
(51) Int. Cl.: G06F 21/85, G06F 9/455, G06F 21/53, G06F 21/57

(54) **METHOD AND APPARATUS FOR PCIE DEVICE TO PASS THROUGH TO VIRTUAL MACHINE, AND RELATED DEVICE**

(30) Priority: 28.06.2023 CN 202310784740
(71) Applicant: Huawei Technologies Co., Ltd., Shenzhen, Guangdong 518129 (CN)
(72) Inventor: XU, Xiangyi, Shenzhen, Guangdong 518129 (CN); WU, Yongzheng, Shenzhen, Guangdong 518129 (CN); WANG, Chenyu, Shenzhen, Guangdong 518129 (CN); CAI, Qishen, Shenzhen, Guangdong 518129 (CN); JIN, Yier, Shenzhen, Guangdong 518129 (CN)
(74) Representative: Goddar, Heinz J.
(86) International application number: PCT/CN2024/101037
(87) International publication number: WO 2025/002060

(57) **Abstract**

A method and an apparatus for passthrough of a PCIe device to a virtual machine, and a related device are disclosed and may be applied to a computing device whose hardware resources are partitioned into an REE side and a TEE side. The computing device (300) includes a first PCIe device, and the TEE side includes the virtual machine. The method includes the following steps: A processor of the computing device (300) obtains a first instruction on the REE side, where the first instruction instructs to configure passthrough of the first PCIe device to the virtual machine on the TEE side. Then, the processor configures, on the TEE side, passthrough of the first PCIe device to the virtual machine according to the first instruction. The method can protect security of passthrough data between the virtual machine and the PCIe device in a scenario of passthrough of the PCIe device to the virtual machine and protect security of the PCIe device, thereby meeting requirements of a user on security of the passthrough data and the PCIe device.

## Description

This application claims priority to Chinese Patent Application No. 202310784740.8, filed with the China National Intellectual Property Administration on June 28, 2023 and entitled "METHOD AND APPARATUS FOR PASSTHROUGH OF PCIE DEVICE TO VIRTUAL MACHINE, AND RELATED DEVICE", which is incorporated herein by reference in its entirety.

### TECHNICAL FIELD

This application relates to the field of virtualization technologies, and in particular, to a method and an apparatus for passthrough of a high-speed serial computer extended bus standard (peripheral component interconnect express, PCIe) device to a virtual machine (virtual machine, VM), and a related device.

### BACKGROUND

Device passthrough (device passthrough) is a virtualization technology that allows a PCIe device (for example, a graphics card, a network interface card, a graphics processing unit (graphics processing unit, GPU), or an embedded neural network processing unit (neural network processing unit, NPU)) on a host to be directly allocated to a virtual machine, so that the virtual machine can directly access the PCIe device without performing virtualization by using a host operating system.

However, in passthrough of a PCIe device to a virtual machine implemented in a current computing device, the virtual machine is managed by a virtual machine monitor (virtual machine monitor, VMM) in a host operating system kernel. Once the host operating system kernel is cracked by an attacker, the attacker can control the virtual machine monitor running in the host operating system kernel to manage the virtual machine. For example, the attacker steals data that is stored in a memory of the virtual machine and that is to be sent by the virtual machine to the passthrough PCIe device, or steals data that is stored in a memory of the virtual machine and that is received by the virtual machine from the passthrough PCIe device. For another example, the attacker may access the passthrough PCIe device via the virtual machine. As a result, a security threat is caused to the PCIe device and passthrough data between the virtual machine and the PCIe device.

### SUMMARY

This application provides a method and an apparatus for passthrough of a PCIe device to a virtual machine, and a related device, to protect security of passthrough data between the virtual machine and the PCIe device in a scenario of passthrough of the PCIe device to the virtual machine and protect security of the PCIe device, thereby meeting requirements of a user on security of the passthrough data and the PCIe device.

According to a first aspect, a method for passthrough of a PCIe device to a virtual machine is provided, and is applied to a computing device. Hardware resources of the computing device are partitioned into a rich execution environment (rich execution environment, REE) side and a trusted execution environment (trusted execution environment, TEE) side, the computing device includes a first PCIe device, the TEE side includes the virtual machine, and the method specifically includes the following steps: A processor of the computing device obtains a first instruction on the REE side, where the first instruction instructs to configure passthrough of the first PCIe device to the virtual machine on the TEE side; and then the processor configures, on the TEE side, passthrough of the first PCIe device to the virtual machine on the TEE side according to the first instruction.

In the foregoing solution, the processor of the computing device obtains, on the REE side, the first instruction instructing to configure passthrough of the first PCIe device to the virtual machine on the TEE side, and performs configuration on the TEE side according to the first instruction, to implement passthrough of the first PCIe device to the virtual machine on the TEE side. Because the virtual machine that is in passthrough with the first PCIe device is located on the TEE side, the virtual machine is protected by a hardware security feature of a TEE and is forbidden to be accessed by a host operating system kernel on the REE side. Therefore, even if an attacker cracks the host operating system kernel, the attacker cannot manage the virtual machine on the TEE side by using a virtual machine monitor in the host operating system kernel. For example, the attacker cannot steal data that is stored in a memory of the virtual machine on the TEE side and that is to be sent by the virtual machine to the first PCIe device, cannot steal data that is stored in the memory of the virtual machine and that is received by the virtual machine from the first PCIe device, and cannot access the first PCIe device via the virtual machine. This meets a requirement of a user on security of the first PCIe device and passthrough data between the virtual machine and the first PCIe device.

In a possible implementation, the processor may specifically configure, on the TEE side, passthrough of the first PCIe device to the virtual machine in the following manner: The processor configures, on the TEE side, a base address register (base address register, BAR) of the first PCIe device; and then establishes a first mapping relationship and a second mapping relationship on the TEE side, where the first mapping relationship is a mapping relationship between a first memory and a second memory, the second mapping relationship is a mapping relationship between a third memory and a fourth memory, the first memory is a memory that is in a memory of the virtual machine and that is used by the virtual machine to access the first PCIe device, the second memory is a memory that is in the BAR of the first PCIe device and that is used by the virtual machine to access the first PCIe device, the third memory is a memory that is in the memory of the virtual machine and that is used by the first PCIe device to access the virtual machine, and the fourth memory is a memory that is in the BAR of the first PCIe device and that is used by the first PCIe device to access the virtual machine.

In the foregoing solution, the processor configures, on the TEE side, the BAR of the first PCIe device, and establishes mapping relationships (namely, the first mapping relationship and the second mapping relationship) between the memory of the virtual machine and the memory of the first PCIe device, so that when the virtual machine needs to access the first PCIe device, the virtual machine accesses the first memory, and then gains access to the second memory based on the mapping relationship (namely, the first mapping relationship) between the first memory and the second memory, that is, gains access to the first PCIe device; and when the first PCIe device needs to access the virtual machine, the first PCIe device accesses the fourth memory, and then gains access to the third memory based on the mapping relationship (namely, the second mapping relationship) between the fourth memory and the third memory, that is, gains access to the virtual machine. It can be learned that in this solution, the virtual machine and the first PCIe device can access each other, that is, passthrough of the virtual machine to the first PCIe device can be implemented. In addition, it can be learned that in the foregoing solution, the virtual machine and the first PCIe device can access each other as if the virtual machine and the first PCIe device access own memories.

In a possible implementation, the computing device includes a root complex (root complex, RC), and the method further includes: When the processor is on the REE side, the root complex disallows the processor to access the first PCIe device.

In the foregoing solution, when the processor is on the REE side, the root complex disallows the processor to access the first PCIe device. This can avoid a security risk on the first PCIe device because the attacker accesses, when software (for example, the host operating system kernel or the virtual machine monitor in the host operating system kernel) on the REE side is cracked by the attacker, the first PCIe device by operating the software on the REE side, for example, configuring or reading/writing the BAR of the first PCIe device.

In a possible implementation, the method further includes the following steps: The processor obtains a second instruction on the REE side (the second instruction instructs to mark the first PCIe device as a secure device, and the second instruction carries an identifier of the first PCIe device); and then the processor sends the second instruction to the root complex. After receiving the second instruction sent by the processor, the root complex marks the first PCIe device as the secure device based on the identifier of the first PCIe device in the second instruction. After marking the first PCIe device as the secure device, when receiving, from the first PCIe device, a first packet related to the virtual machine (the first packet carries a first identifier, and the first identifier indicates that the first PCIe device is the secure device), the root complex may determine, based on the first identifier carried in the first packet, that the first PCIe device is the secure device, and then send the first packet to the virtual machine.

In other words, if determining that the first PCIe device is not the secure device, the root complex rejects sending the first packet to the virtual machine.

In the foregoing solution, the processor sends, to the root complex, the second instruction instructing to mark the first PCIe device as the secure device, so that the root complex marks the first PCIe device as the secure device. After the root complex marks the first PCIe device as the secure device, when receiving the packet sent by the first PCIe device to the virtual machine, the root complex may determine, based on the first identifier carried in the packet, that the first PCIe device is the secure device, and then send the packet to the virtual machine. Otherwise, the root complex rejects sending the packet to the virtual machine. This can prevent the virtual machine from being accessed by an untrusted PCIe device that is not marked as a secure device, and protect security of the virtual machine.

In a possible implementation, the first identifier is the identifier of the first PCIe device, and that the root complex marks the first PCIe device as the secure device based on the identifier of the first PCIe device in the second instruction includes: The root complex marks the first PCIe device as the secure device in the root complex based on the identifier of the first PCIe device in the second instruction.

In the foregoing solution, the first PCIe device is marked as the secure device in the root complex based on the identifier of the first PCIe device, so that when receiving, from the first PCIe device or another PCIe device, a packet related to the virtual machine, the root complex can determine, based on the identifier of the first PCIe device carried in the packet or an identifier of the another PCIe device carried in the packet, whether the PCIe device is the secure device. Because the existing packet originally carries the identifier of the PCIe device, the packet does not need to be modified, so that an implementation process of the solution is simple.

To improve flexibility of the solution, in a possible implementation, that the root complex marks the first PCIe device as the secure device based on the identifier of the first PCIe device in the second instruction includes: The root complex marks the first PCIe device as the secure device in the first PCIe device based on the identifier of the first PCIe device in the second instruction.

In this manner, when the PCIe device marked as the secure device sends a packet to the virtual machine, the packet carries the first identifier indicating that the PCIe device is the secure device. When the PCIe device not marked as the secure device sends a packet to the virtual machine, the packet does not carry the first identifier, or the packet carries a second identifier.

For example, in a specific implementation, when the PCIe device sends the packet to the virtual machine, the sent packet includes a security identifier (security ID) field. If the PCIe device is marked as the secure device, the security identifier field in the packet carries the first identifier, for example, 0. If the PCIe device is not marked as the secure device, the security identifier field in the packet is empty or carries the second identifier, for example, 1.

In a possible implementation, a virtual function input/output (virtual function input/output, VFIO) driver is deployed on the REE side, and a virtual machine monitor configured to manage the virtual machine on the TEE side is deployed on the TEE side; and an operation performed by the processor on the REE side is performed by the processor by running the VIFO driver, and an operation performed by the processor on the TEE side is performed by the processor by running the virtual machine monitor.

In a possible implementation, the root complex may send the first packet to the virtual machine via the virtual machine monitor on the TEE side; and the method further includes: The processor may run the virtual machine monitor on the TEE side to send, to the first PCIe device, a second packet that is related to the first PCIe device and that is received from the virtual machine.

In the foregoing solution because communication data between the first PCIe device and the virtual machine is forwarded via the virtual machine monitor on the TEE side, the communication data does not pass through the REE side. This can prevent the communication data from being accessed by the software (for example, the host operating system kernel) on the REE side during transmission. Even if the software on the REE side is cracked by the attacker, the communication data between the first PCIe and the virtual machine cannot be stolen. This ensures security of the communication data during transmission.

In a possible implementation, before the processor obtains the first instruction on the REE side, the method further includes the following steps: The processor obtains, on the REE side, configuration information of the virtual machine to be created; and then creates, on the TEE side, the virtual machine based on the configuration information.

The foregoing implementation is implemented to create the virtual machine on the TEE side, to facilitate subsequent passthrough of the first PCIe device and the virtual machine on the TEE side. This meets the requirement of the user on security of the first PCIe device and the passthrough data between the virtual machine and the first PCIe device.

In a possible implementation, the first PCIe device includes any one or more of the following: a GPU, an NPU, a network interface card, a graphics card, and a sound card.

It should be understood that the foregoing first PCIe device is merely used as an example, and should not be considered as a specific limitation on the first PCIe device.

It may be understood that when the first PCIe device includes the GPU and/or the NPU, the foregoing solution can be used to implement secure heterogeneous computing.

According to a second aspect, an apparatus for configuring passthrough of a PCIe device to a virtual machine is provided and is applied to a computing device. Hardware resources of the computing device are partitioned into an REE side and a TEE side, the computing device includes a first PCIe device, the TEE side includes a virtual machine, and the apparatus specifically includes an obtaining module and a processing module.

The obtaining module is configured to obtain a first instruction on the REE side, where the first instruction instructs to configure passthrough of the first PCIe device to the virtual machine on the TEE side.

The processing module is configured to configure passthrough of the first PCIe device to the virtual machine on the TEE side according to the first instruction.

In a possible implementation, the processing module is configured to configure passthrough of the first PCIe device to the virtual machine on the TEE side in the following manner: The processing module configures, on the TEE side, a BAR of the first PCIe device; and then establishes a first mapping relationship and a second mapping relationship, where the first mapping relationship is a mapping relationship between a first memory and a second memory, the first memory is a memory that is in a memory of the virtual machine and that is used by the virtual machine to access the first PCIe device, the second memory is a memory that is in the BAR of the first PCIe device and that is used by the virtual machine to access the first PCIe device, the second mapping relationship is a mapping relationship between a third memory and a fourth memory, the third memory is a memory that is in the memory of the virtual machine and that is used by the first PCIe device to access the virtual machine, and the fourth memory is a memory that is in the BAR of the first PCIe device and that is used by the first PCIe device to access the virtual machine.

In a possible implementation, the apparatus further includes an access control module, configured to: if the obtaining module/the processing module is on the REE side, disallow the obtaining module/the processing module to access the first PCIe device.

In a possible implementation, the apparatus further includes a sending module.

The obtaining module is further configured to obtain a second instruction on the REE side, where the second instruction instructs to mark the first PCIe device as a secure device, and the second instruction carries an identifier of the first PCIe device.

The sending module is configured to send the second instruction to the access control module.

The access control module is further configured to mark the first PCIe device as the secure device based on the identifier of the first PCIe device in the second instruction.

The access control module is further configured to receive, from the first PCIe device, a first packet related to the virtual machine, where the first packet carries a first identifier, and the first identifier indicates that the first PCIe device is the secure device.

The access control module is further configured to: determine, based on the first identifier in the first packet, that the first PCIe device is the secure device, and then send the first packet to the virtual machine.

In a possible implementation, the first identifier is the identifier of the first PCIe device, and the access control module is configured to mark the first PCIe device as the secure device in a root complex of the computing device based on the identifier of the first PCIe device in the second instruction.

In a possible implementation, the access control module is configured to mark the first PCIe device as the secure device in the first PCIe device based on the identifier of the first PCIe device in the second instruction.

In a possible implementation, a VFIO driver is deployed on the REE side, a virtual machine monitor configured to manage the virtual machine is deployed on the TEE side, the obtaining module and the sending module are deployed in the VFIO driver, the processing module is deployed in the virtual machine monitor on the TEE side, and the access control module is deployed in the root complex of the computing device.

In a possible implementation, the access control module is configured to send the first packet to the virtual machine via the virtual machine monitor on the TEE side.

In a possible implementation, the virtual machine monitor on the TEE side is further configured to send, to the first PCIe device, a second packet that is related to the first PCIe device and that is received from the virtual machine.

In a possible implementation, before being configured to obtain the first instruction, the obtaining module is further configured to obtain, on the REE side, configuration information of the virtual machine to be created; and the processing module is further configured to create, on the TEE side, the virtual machine based on the configuration information.

In a possible implementation, the first PCIe device includes any one or more of the following: a GPU, an NPU, a network interface card, a graphics card, and a sound card. It should be understood that the foregoing first PCIe device is merely used as an example, and should not be considered as a specific limitation on the first PCIe device.

For related beneficial effect and descriptions of the apparatus for configuring passthrough of the PCIe device to the virtual machine provided in the second aspect and any one of the implementations of the second aspect, refer to the related beneficial effect and descriptions of the first aspect and any one of the implementations of the first aspect. Details are not described herein again.

According to a third aspect, a method for passthrough of an external device to a virtual machine is provided. The method includes the following steps.

A secure virtual machine management program receives a device passthrough request, where the device passthrough request is used to configure passthrough of a first external device to a first confidential virtual machine, and the device passthrough request carries a device identifier of the first external device and an identifier of the first confidential virtual machine.

The secure virtual machine management program configures passthrough of the first external device to the first confidential virtual machine based on the device passthrough request.

In the foregoing solution, the secure virtual machine management program configures passthrough of the first external device to the first confidential virtual machine on the TEE side based on the device passthrough request. Because the first confidential virtual machine is located in a secure world, the first confidential virtual machine is protected by a hardware security feature of the secure world and is forbidden to be accessed by a host operating system kernel in a normal world. Therefore, even if an attacker cracks the host operating system kernel in the normal world, the attacker cannot manage the first confidential virtual machine by using a normal virtual machine management program in the host operating system kernel. For example, the attacker cannot steal data that is stored in a memory of the first confidential virtual machine and that is to be sent to the first external device, cannot steal data that is stored in the memory of the first confidential virtual machine and that is received from the first external device, and cannot access the first external device by using the first confidential virtual machine. This meets a requirement of a user on security of the first external device and passthrough data between the virtual machine and the first external device.

In a possible implementation, a process in which the secure virtual machine management program receives the device passthrough request may be as follows: The secure virtual machine management program receives the device passthrough request sent by a device passthrough management module, where the device passthrough management module runs in a normal world.

After configuring passthrough of the first external device to the first confidential virtual machine, the secure virtual machine management program may send a notification message to the device passthrough management module, to notify that configuration of passthrough of the first external device to the first confidential virtual machine is completed.

In a possible implementation, that the secure virtual machine management program configures passthrough of the first external device to the first confidential virtual machine may include the following steps.

The secure virtual machine management program establishes a first mapping relationship in an MMU and establishes a second mapping relationship in an IOMMU, where the first mapping relationship is a mapping relationship between virtual address space of the first confidential virtual machine and MMIO address space of the first external device, the second mapping relationship is a mapping relationship between IO virtual address space of the first external device and DMA address space of the first external device, and both the MMIO address space and the DMA address space belong to physical address space of the first confidential virtual machine.

The secure virtual machine management program sends a security flag instruction to an IO hardware module, to instruct the IO hardware module to add a security flag to a packet received from the first external device, or the secure virtual machine management program sends a security flag instruction to the first external device, to instruct the first external device to add a security flag to a generated packet, where the security flag indicates that the first external device has a permission to access a secure memory.

The foregoing implementation is implemented. The secure virtual machine management program establishes the first mapping relationship in the MMU, so that when the first confidential virtual machine needs to access the first external device (for example, needs to deliver an instruction or data to the first external device), after receiving a packet from the first confidential virtual machine, the MMU determines, based on the first mapping relationship, that the first confidential virtual machine can access the first external device, and then forwards, to the first external device, the packet from the first confidential virtual machine, to implement access of the first confidential virtual machine to the first external device. The secure virtual machine management program establishes the second mapping relationship in the IOMMU and sends the security flag instruction to the IO hardware module, to instruct the IO hardware module to add the security flag to the first packet received from the first external device, or sends the security flag instruction to the first external device, to instruct the first external device to add the security flag to the generated first packet, so that when the first external device needs to access the first confidential virtual machine (for example, needs to return data to the first confidential virtual machine), after receiving the first packet from the first external device, the IOMMU determines, based on the second mapping relationship and the security flag in the first packet, that the first external device can access the first confidential virtual machine, and forwards, to the first confidential virtual machine, the packet from the first external device, to implement access of the first external device to the first confidential virtual machine.

In a possible implementation, when a computing device to which the first confidential virtual machine belongs includes an RC, the IO hardware module is integrated into the RC.

In a possible implementation, the device identifier of the first external device is a BDF number.

In a possible implementation, the secure virtual machine management program includes a trust IO management module, and an operation performed by the secure virtual machine management program is performed by the trust IO management module.

In a possible implementation, the first external device is a GPU, an NPU, a TPU, a network interface card, or a hard disk.

In a possible implementation, the method is applied to the computing device whose hardware resources are partitioned into an REE side and a TEE side, and the first confidential virtual machine is located on the TEE side.

According to a fourth aspect, an apparatus for passthrough of an external device to a virtual machine is provided. The apparatus includes:
a receiving module, configured to receive a device passthrough request, where the device passthrough request is used to configure passthrough of a first external device to a first confidential virtual machine, and the device passthrough request carries a device identifier of the first external device and an identifier of the first confidential virtual machine; and
a configuration module, configured to configure passthrough of the first external device to the first confidential virtual machine based on the device passthrough request.

In a possible implementation, the apparatus further includes a sending module;
the receiving module is configured to receive the device passthrough request sent by a device passthrough management module, where the device passthrough management module runs in a normal world; and
the sending module is configured to send a notification message to the device passthrough management module, to notify that configuration of passthrough of the first external device to the first confidential virtual machine is completed.

In a possible implementation, the configuration module is specifically configured to:
establish a first mapping relationship in an MMU and establish a second mapping relationship in an IOMMU, where the first mapping relationship is a mapping relationship between virtual address space of the first confidential virtual machine and MMIO address space of the first external device, the second mapping relationship is a mapping relationship between IO virtual address space of the first external device and DMA address space of the first external device, and both the MMIO address space and the DMA address space belong to physical address space of the first confidential virtual machine; and
send a security flag instruction to an IO hardware module, to instruct the IO hardware module to add a security flag to a packet received from the first external device, or send, by the secure virtual machine management program, a security flag instruction to the first external device, to instruct the first external device to add a security flag to a generated packet, where the security flag indicates that the first external device has a permission to access a secure memory.

In a possible implementation, when a computing device to which the first confidential virtual machine belongs includes an RC, the IO hardware module is integrated into the RC.

In a possible implementation, the device identifier of the first external device is a BDF number.

In a possible implementation, the apparatus further includes a trust IO management module, and an operation performed by the apparatus is performed by the trust IO management module.

In a possible implementation, the first external device is a GPU, an NPU, a TPU, a network interface card, or a hard disk.

In a possible implementation, the apparatus is applied to the computing device whose hardware resources are partitioned into an REE side and a TEE side, and the first confidential virtual machine is located on the TEE side.

According to a fifth aspect, a method for passthrough of an external device to a virtual machine is provided. The method includes the following steps.

A device passthrough management module sends a device passthrough request to a secure virtual machine management program, where the device passthrough management module runs in a normal world, the device passthrough request is used to configure passthrough of a first external device to a first confidential virtual machine, and the device passthrough request carries a device identifier of the first external device and an identifier of the first confidential virtual machine.

The device passthrough management module receives a notification message sent by the secure virtual machine management program, where the notification message indicates that configuration of passthrough of the first external device to the first confidential virtual machine is completed.

In a possible implementation, the device identifier of the first external device is a BDF number.

In a possible implementation, the first external device is a GPU, an NPU, a TPU, a network interface card, or a hard disk.

In a possible implementation, the method is applied to a computing device whose hardware resources are partitioned into an REE side and a TEE side, and the first confidential virtual machine is located on the TEE side.

For related beneficial effect and descriptions of the method for passthrough of the external device to the virtual machine provided in the fifth aspect and any one of the implementations of the fifth aspect, refer to the related beneficial effect and descriptions of the third aspect and any one of the implementations of the third aspect. Details are not described herein again.

According to a sixth aspect, an apparatus for passthrough of an external device to a virtual machine is provided. The apparatus includes:
a sending module, configured to send a device passthrough request to a secure virtual machine management program, where the device passthrough management module runs in a normal world, the device passthrough request is used to configure passthrough of a first external device to a first confidential virtual machine, and the device passthrough request carries a device identifier of the first external device and an identifier of the first confidential virtual machine; and
a receiving module, configured to receive a notification message sent by the secure virtual machine management program, where the notification message indicates that configuration of passthrough of the first external device to the first confidential virtual machine is completed.

In a possible implementation, the device identifier of the first external device is a BDF number.

In a possible implementation, the first external device is a GPU, an NPU, a TPU, a network interface card, or a hard disk.

In a possible implementation, the apparatus is applied to a computing device whose hardware resources are partitioned into an REE side and a TEE side, and the first confidential virtual machine is located on the TEE side.

According to a seventh aspect, a computing device is provided. The computing device includes a processor and a storage. The processor is configured to execute instructions stored in the storage, so that the computing device implements the method provided in any one of the first aspect, the third aspect, or the fifth aspect, or the possible implementations of the first aspect, the third aspect, or the fifth aspect.

According to an eighth aspect, a computer-readable storage medium is provided. The computer-readable storage medium stores instructions, and the instructions are used to implement the method provided in any one of the first aspect, the third aspect, the fifth aspect, or the possible implementations of the first aspect, the third aspect, or the fifth aspect.

According to a ninth aspect, a computer program product is provided, and includes a computer program. When the computer program is read and executed by a computing device, the computing device is enabled to perform the method provided in any one of the first aspect, the third aspect, the fifth aspect, or the possible implementations of the first aspect, the third aspect, or the fifth aspect.

### BRIEF DESCRIPTION OF DRAWINGS

FIG. 1 is a diagram of a scenario of passthrough of an external device to a virtual machine according to this application;
FIG. 2 is a diagram of an ARM hardware architecture according to this application;
FIG. 3 is a diagram of a structure of a computing device according to this application;
FIG. 4 is a schematic flowchart of a method for passthrough of an external device to a virtual machine according to this application;
FIG. 5 is a diagram of a structure of another computing device according to this application;
FIG. 6 is a schematic flowchart of configuring, by a computing device, passthrough of an external device to a virtual machine according to this application;
FIG. 7A is a schematic flowchart of another method for passthrough of an external device to a virtual machine according to this application;
FIG. 7B is a diagram of a process of configuring passthrough of a first external device to a first confidential virtual machine according to this application;
FIG. 8A is a diagram of a structure of another computing device according to this application;
FIG. 8B is a diagram of a structure of another computing device according to this application;
FIG. 9A is a diagram of a process in which a secure virtual machine management program indicates an IO hardware module to perform security marking according to this application;
FIG. 9B is a diagram of a process in which a secure virtual machine management program indicates a first external device to perform security marking according to this application;
FIG. 10A is a diagram of a structure of an apparatus for configuring passthrough of an external device to a virtual machine according to an example of this application;
FIG. 10B is a diagram of a structure of another apparatus for configuring passthrough of an external device to a virtual machine according to an example of this application;
FIG. 10C is a diagram of a structure of another apparatus for configuring passthrough of an external device to a virtual machine according to an example of this application; and
FIG. 11 is a diagram of a structure of another computing device according to this application.

### DESCRIPTION OF EMBODIMENTS

The following describes technical solutions of this application with reference to the accompanying drawings.

To make the technical solutions provided in this application clearer, related terms are first explained.
(1) A virtual machine is a complete computer system that is formed through software simulation, has a complete hardware system function, and runs in a completely isolated environment. All tasks that can be completed on a server can be implemented on a virtual machine. Each virtual machine has an independent hard disk and operating system. A user of a virtual machine can operate the virtual machine as if the user is using a server. (2) An external device, also referred to as an acceleration device or a heterogeneous device, is usually hardware devices used to accelerate computing, process data, or perform a specific task. These devices are usually designed to accelerate a specific type of computing (such as confidential computing) or processing and improve computing efficiency and processing performance, such as a GPU, an NPU, a TPU, a network interface card, a sound card, and a hard disk. Among the external devices, a device that communicates by using the PCIe protocol is usually referred to as a PCIe device, also referred to as an endpoint (endpoint), and is located at an end of PCIe bus system topology and usually functions as an initiator or a terminator of a bus operation. A PCIe bus architecture may include a plurality of PCIe devices. In an actual scenario, the external device may also communicate with a host by using a protocol like a compute express link (compute express link, CXL) or NVLink. A communication protocol between the external device and the host is not limited in this application.
(3) Device passthrough is a virtualization technology that allows an external device (for example, a graphics card, a network interface card, a GPU, or an NPU) on a host to be directly allocated to a virtual machine, so that the virtual machine can directly access the external device without virtualization by using a host operating system.
(4) Direct memory access (direct memory access, DMA) is an interface technology in which an external device directly exchanges data with a system memory without using a processor (which may also be referred to as a central processing unit (central processing unit, CPU)). The external device may transmit the data to the memory in batches by using the DMA, and then send an interrupt to notify the processor to obtain the data. A transmission process does not pass through the processor. This reduces a burden of the processor.
(5) A system memory management unit (system memory management unit, SMMU), also referred to as an input/output memory management unit (I/O memory management unit, IOMMU), is located between an external device and a bus, and is an address translation bridge between the external device and the bus. The system memory management unit has a function similar to that of a memory management unit (memory management unit, MMU), and can implement functions such as address translation (mapping), memory attribute translation, and permission check. The address translation may be stage 1 translation (to be specific, virtual address (virtual address, VA) -> physical address (physical address, PA)), or stage 2 translation (to be specific, intermediate physical address (intermediate physical address, IPA) -> PA), or stage 1 + stage 2 translation (to be specific, VA -> IPA -> PA).
   A main function of the SMMU is DMA remapping (remapping) allowing an external device to gain access to a host memory by using a DMA technology.
(6) VFIO is a user mode driver framework provided by a Linux (Linux) kernel for an IOMMU, uses the IOMMU for passthrough of an I/O device to a user mode, and supports DMA remapping.
(7) Memory-mapped I/O (memory-mapped I/O, MMIO) is a part of a PCI specification, where an I/O device is placed in memory space instead of I/O space. From a perspective of a processor, after memory-mapped I/O, the processor accesses the I/O device as if the processor accesses a memory. Memory space where an external device is placed is usually referred to as MMIO address space.
(8) A BAR stores a base address of address space used by a PCIe device. The base address stores an address (namely, a bus address) of the PCIe device in PCIe bus domain.
(9) A root complex is a device that is connected to a processor, a host memory, and a PCIe bus, is configured to manage all buses and all nodes (such as a switch (switch) and an endpoint) in a PCIe system, and is a bridge for communication between nodes in the PCIe system. In the PCIe system, only the root complex and a node have permissions to access (including configuration and read/write) a BAR of the node.

The following describes an application scenario in this application.

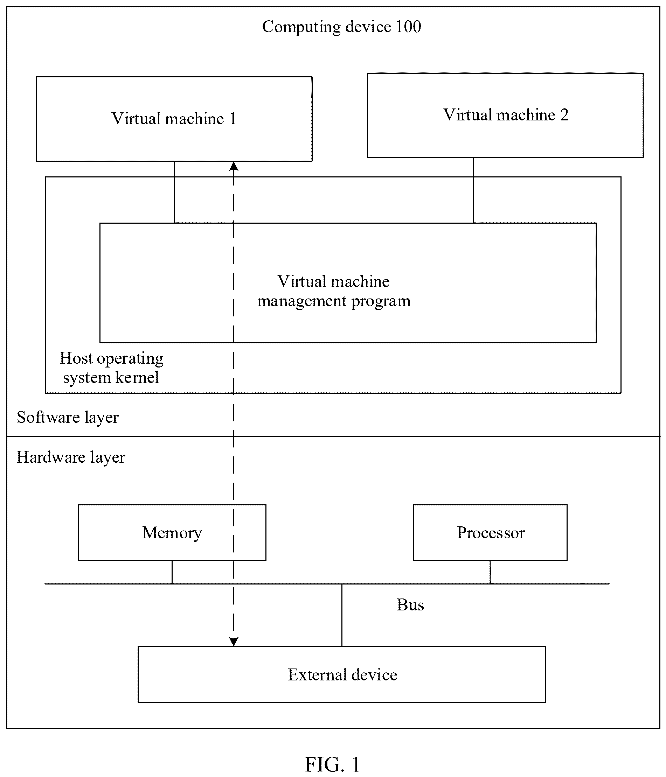

This application relates to a scenario of passthrough of an external device to a virtual machine. FIG. 1 is a diagram of the scenario of passthrough of the external device to the virtual machine according to this application. As shown in FIG. 1, a computing device 100 (for example, a server) includes a hardware layer and a software layer. The hardware layer is a common configuration of the computing device 100. The external device may be a device that can be inserted into a slot of the server, for example, a network interface card, a GPU, an NPU, or an offload card. The software layer includes a host operating system kernel (which may also be referred to as a host kernel) installed and running on the computing device 100. A virtual machine management program (which may also be referred to as a virtual machine monitor) is disposed in the host operating system kernel. Functions of the virtual machine management program are to implement computing virtualization, network virtualization, and storage virtualization of a virtual machine and manage the virtual machine.

Computing virtualization is to provide a part of a processor and memory of the computing device 100 to the virtual machine. Network virtualization is to provide a part of functions (for example, bandwidth) of the network interface card to the virtual machine. Storage virtualization is to provide a part of disks to the virtual machine.

The virtual machine management program may further implement logic isolation between different virtual machines, and manage the virtual machines, for example, create a virtual machine, simulate virtual hardware for the virtual machine based on the hardware layer (a hardware simulation function), delete a virtual machine, forward and/or process network packets between all virtual machines (for example, a virtual machine 1 and a virtual machine 2) running on the computing device 100 or forward a network packet between the virtual machine on the computing device 100 and the external network (a virtual switching function), process I/O generated by the virtual machine, and the like.

Running environments (for example, virtual machine applications, operating systems, and virtual hardware) in different virtual machines are completely isolated. If the virtual machine 1 and the virtual machine 2 need to communicate with each other, a network packet needs to be forwarded via the virtual machine management program.

A tenant may remotely log in to the virtual machine, and install, set, and uninstall an application on the virtual machine in an operating system environment of the virtual machine.

In FIG. 1, as shown by a dashed arrow, passthrough of the external device (for example, passthrough of the virtual machine 1) to the virtual machine can be implemented, so that the virtual machine can directly access the external device without virtualization performed by using a host operating system. This saves a computing capability and a memory of the computing device 100.

However, the virtual machine is managed by the virtual machine management program in the host operating system kernel. Once the host operating system kernel is cracked by an attacker, the attacker can control the virtual machine management program to manage the virtual machine. For example, the attacker may steal data that is stored in a memory of the virtual machine and that is to be sent by the virtual machine to the passthrough external device, or steal data that is stored in the memory of the virtual machine and that is received by the virtual machine from the passthrough external device. In another example, the attacker may access the external device via the virtual machine. As a result, a security threat is caused to the external device and passthrough data between the virtual machine and the external device.

Therefore, how to protect security of the external device and the passthrough data of passthrough of the external device to the virtual machine in the scenario of passthrough of the external device to the virtual machine, and meet a requirement of a user on security of the passthrough data and the external device has become an urgent problem to be resolved in this field.

To resolve the foregoing problem, this application provides a computing device and a method for passthrough of an external device to a virtual machine. To help understand the computing device and the method for passthrough of the external device to the virtual machine provided in this application, the following first describes a TrustZone (TrustZone) technology used in this application.

With continuous improvement of performance of an advanced reduced instruction set device (advanced RISC machine, ARM) processor, a computing device (such as a server or an intelligent terminal device) running the ARM processor brings great convenience to people's life. In addition, the computing device carries an increasing amount of user data, and a user pays more attention to security of the computing device. On the ARM processor, a current mainstream system-level solution is a TrustZone (TrustZone) technology.

As a security extension, the TrustZone technology is first introduced in an ARMv6 version, and divides hardware resources of a computing device into two worlds: an REE side (which may also be referred to as a normal world (normal world)) and a TEE side (which may also be referred to as a secure world (secure world)). As a hardware security feature, the TrustZone technology works on the TEE side.

On the REE side, it does not mean that an operating system (operating system, OS) or software running on the REE side is malicious, but that security of an environment in which the REE side is located is lower than that of the TEE side. When a processor operates on the REE side, access to resources (such as a register, a memory, a cache (cache), and a peripheral) on the TEE side is forbidden. Once the processor attempts to access these resources, a system directly crashes. For example, TrustZone may set a sensitive memory as a secure memory (secure memory) by configuring a trustzone address space controller (trustzone address space controller, TZASC) register and a trustzone memory adapter (trustzone memory adapter, TZMA) register. As a result, the REE side cannot access the memory. When the processor operates on the TEE side, the processor can access both a resource on the TEE side and a resource on the REE side. Because the TEE side has a higher permission than an operating system on the REE side, TrustZone may be used as a root of trust to provide a higher-level security protection solution for the operating system on the REE side.

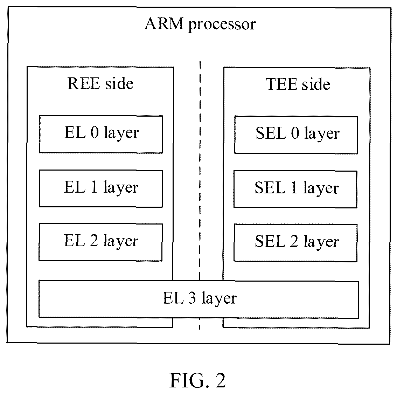

ARMv8.4 is used as an example. FIG. 2 shows an ARM hardware architecture. The left side is an architecture on an REE side, and the right side is an architecture on a TEE side. The REE side includes four operating permission layers: an exception level 0 (exception level 0, EL 0) layer, an EL 1 layer, an EL 2 layer, and an EL 3 layer. The TEE side includes four operating permission layers: a secure exception level 0 (secure exception level 0, SEL 0) layer, a SEL 1 layer, a SEL 2 layer, and an EL 3 layer. The EL 0 layer may also be referred to as a user mode layer, the EL 1 layer may also be referred to as a kernel mode layer, the EL 2 layer may also be referred to as a virtual machine management program layer, and the EL 3 layer may also be referred to as a secure monitor (secure monitor) layer. A higher value has a higher permission, and a lower value has a lower permission.

An operating system closely related to a user runs on the EL 0 layer and EL 1 layer on the REE side, for example, an operating system of a virtual machine runs on the EL 0 layer and the EL 1 layer. A virtual machine management program runs on the EL 2 layer. ARM trusted firmware runs on the EL 3 layer. The ARM trusted firmware (ARM trusted firmware, ATF) is a first component that runs when a processor is started, and is bottom-layer firmware provided by the ARM. The firmware unifies bottom-layer interface standards of the ARM, such as a power status control interface (power status control interface, PSCI), trusted board boot requirements (trusted board boot requirements, TBBRs), and secure monitor call (secure monitor call, SMC) operations for switching between a secure world state and a normal world state.

The following continues to describe the computing device provided in this application. The computing device provided in this application is mainly a computing device whose hardware resources are partitioned into an REE side and a TEE side, for example, the computing device on which the ARM processor runs, or may be a computing device whose hardware resources are partitioned into an REE side and a TEE side by using another technology. This is not specifically limited in this application.

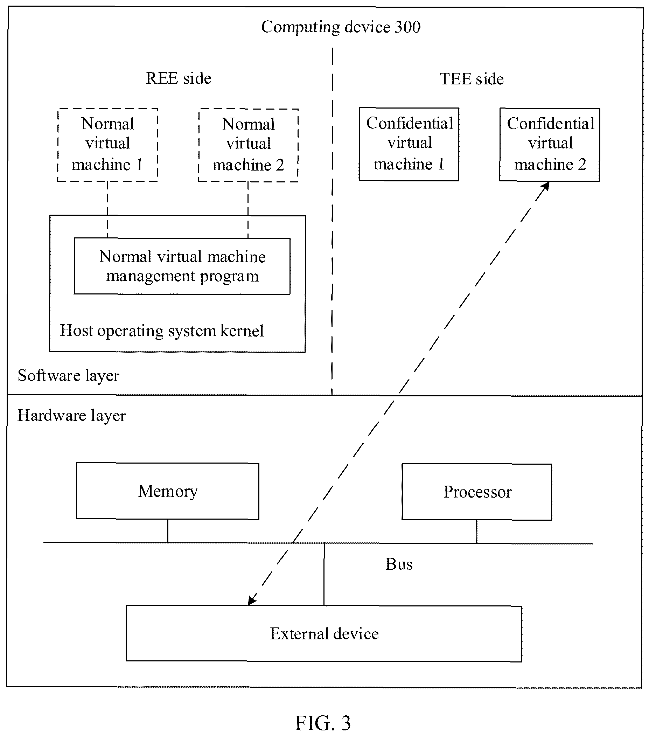

FIG. 3 shows an example of a computing device 300 provided in this application. Hardware resources of the computing device 300 are partitioned into an REE side and a TEE side, and a host operating system kernel is located on the REE side.

As shown in FIG. 3, in the computing device 300, a virtual machine is deployed on the TEE side, and is deployed on a different side from the host operating system kernel.

To distinguish the virtual machine on the TEE side from the virtual machine in the computing device 100 in FIG. 1 in which the REE side and the TEE side are not partitioned, and a virtual machine on the REE side in FIG. 3, in the following embodiments, the virtual machine on the TEE side is referred to as a confidential virtual machine, and the virtual machine in FIG. 1 and the virtual machine on the REE side in FIG. 3 are referred to as normal virtual machines.

As shown in FIG. 3, the TEE side of the computing device 300 may include one or more confidential virtual machines, and the REE side may include one or more normal virtual machines. In FIG. 3, an example in which the TEE side and the REE side each include two virtual machines is used.

Similar to the normal virtual machine, the confidential virtual machine may include an operating system kernel and one or more applications (applications, APPs) (not shown in FIG. 3). The operating system kernel in the confidential virtual machine and the operating system kernel in the normal virtual machine may be powerful general operating system kernels such as Linux. This is not specifically limited in this application.

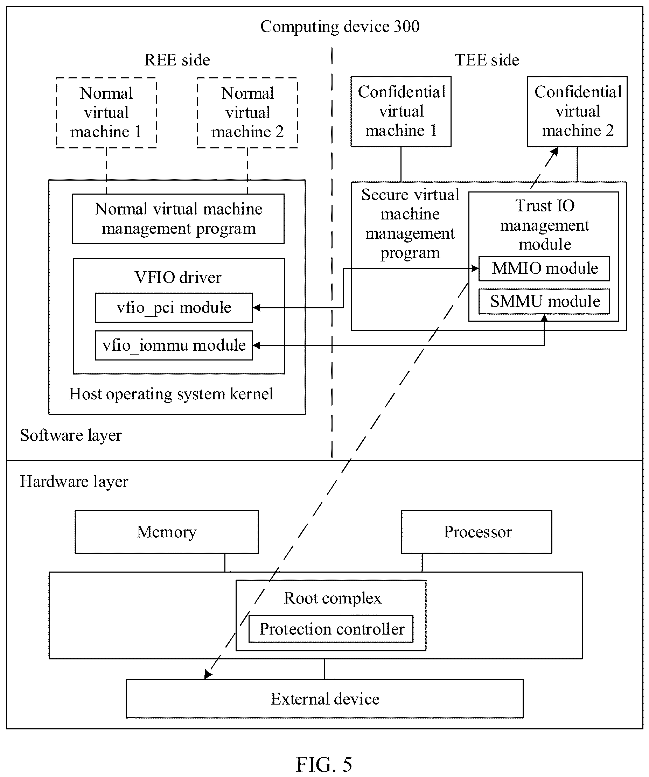

It should be noted that a virtual machine management program in the host operating system kernel (the virtual machine management program in the host operating system kernel is referred to as a normal virtual machine management program below to distinguish from a virtual machine management program on the TEE side described below) is mainly used to manage the normal virtual machine. When managing the confidential virtual machine, the virtual machine management program needs to perform a management operation by using a related module on the TEE side (for example, a secure virtual machine management program on the TEE side shown in FIG. 5). In other words, the normal virtual machine management program does not have a permission to access the confidential virtual machine. This protects security of the confidential virtual machine.

As shown in FIG. 3, the computing device 300 is similar to the computing device 100, and also includes a hardware layer. For details about the hardware layer, refer to related descriptions in FIG. 1. For brevity of the specification, details are not described herein again.

It should be understood that the computing device 300 is merely an example provided in this application, and the computing device 300 may have more or fewer components than those shown in FIG. 3, or may have different component configurations.

In a specific embodiment of this application, when a user has a low requirement on security of an external device and passthrough data during passthrough of the external device to a virtual machine, based on the user requirement, a normal virtual machine may be created, and passthrough of the external device to the normal virtual machine is configured.

When the user has a high requirement on security of the passthrough data and the external device, based on the user requirement, a confidential virtual machine may be created, and passthrough of the external device to the confidential virtual machine, as shown in FIG. 3, passthrough of the external device to a confidential virtual machine 2, is configured. Because the confidential virtual machine is located on the TEE side, the confidential virtual machine is protected by a hardware security feature of a TEE. Even if the host operating system kernel is cracked by an attacker, the attacker cannot manage the confidential virtual machine by using the normal virtual machine management program in the host operating system kernel. For example, the attacker cannot steal data that is stored in a memory of the confidential virtual machine and that is to be sent by the confidential virtual machine to the external device, cannot steal data that is stored in the memory of the confidential virtual machine and that is received by the confidential virtual machine from the external device, and cannot access the external device by using the confidential virtual machine. This meets the requirement of the user on security of the first external device and passthrough data between the virtual machine and the external device.

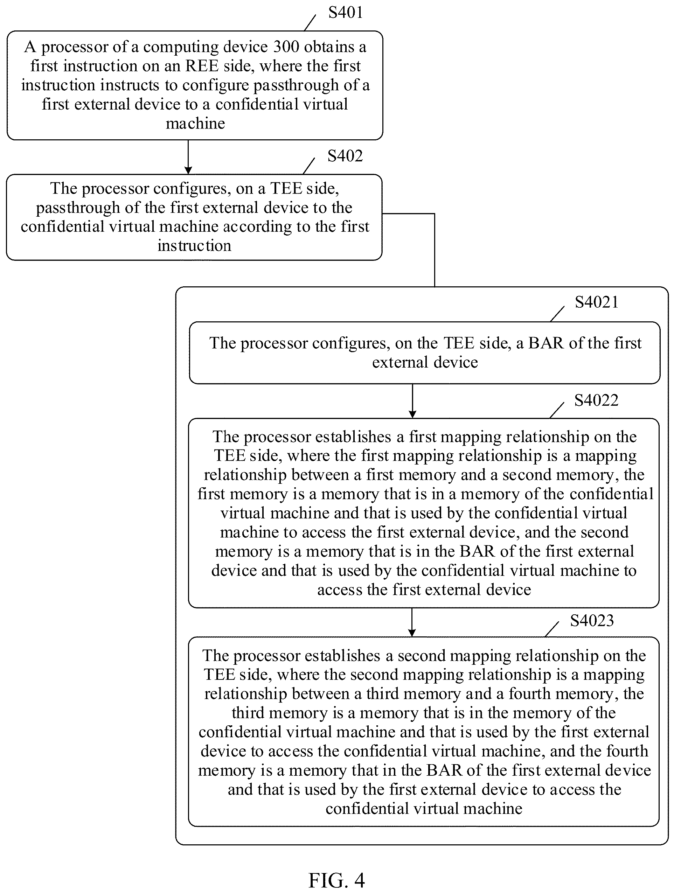

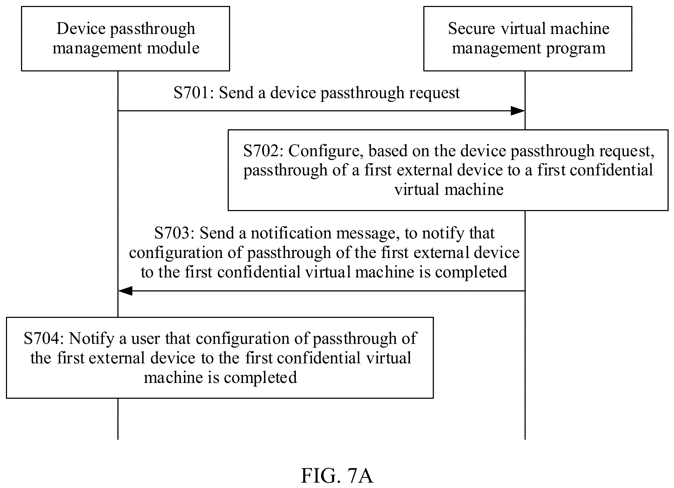

With reference to schematic flowcharts of two methods for passthrough of an external device to a virtual machine provided in this application and shown in FIG. 4 and FIG. 7A, the following describes in detail a process of configuring, by the computing device 300 shown in FIG. 3, passthrough of the external device to the confidential virtual machine on the TEE side.

### (1) First method for passthrough of the external device to the virtual machine

As shown in FIG. 4, the method includes steps S401 and S402.

S401: A processor of the computing device 300 obtains a first instruction on the REE side, where the first instruction instructs to configure passthrough of a first external device to a first confidential virtual machine.

S402: The processor configures, on a TEE side, passthrough of the first external device to the first confidential virtual machine according to the first instruction.

The first confidential virtual machine may be any one of confidential virtual machines on the TEE side.

The first instruction may carry a configuration parameter used to configure passthrough of the first external device to the first confidential virtual machine, for example, a device identifier of the first external device (for example, a stream identifier (stream ID) of the first external device), and an identifier of the first confidential virtual machine (for example, an ID of the first confidential virtual machine). The device identifier of the first external device is used by the processor to position the first external device, and the identifier of the first confidential virtual machine is used by the processor to position the first confidential virtual machine. The first external device may be one or more of the external devices such as a GPU, an NPU, a TPU, a network interface card, a graphics card, and a sound card. The first external device is not specifically limited in this application.

In a possible embodiment, the first instruction may be input by a user to the computing device 300 through an interface of the computing device 300. After obtaining the first instruction, the computing device 300 stores the first instruction in a memory on the REE side. Subsequently, the processor reads the first instruction from the memory on the REE side, and executes the first instruction on the TEE side.

In a possible embodiment, a process in which the processor configures, on the TEE side, passthrough of the first external device to the first confidential virtual machine may include S4021 to S4023 shown in FIG. 4.

S4021: The processor configures, on the TEE side, a BAR of the first external device.

The BAR of the first external device may be understood as an address of the first external device in PCIe bus domain, namely, a bus address of the first external device.

S4022: The processor establishes a first mapping relationship on the TEE side, where the first mapping relationship is a mapping relationship between a first memory and a second memory, the first memory is a memory that is in a memory of the first confidential virtual machine and that is used by the first confidential virtual machine to access the first external device, and the second memory is a memory that is in the BAR of the first external device and that is used by the first confidential virtual machine to access the first external device.

It may be understood that the memory of the first confidential virtual machine belongs to the TEE side.

S4023: The processor establishes a second mapping relationship on the TEE side, where the second mapping relationship is a mapping relationship between a third memory and a fourth memory, the third memory is a memory that is in the memory of the first confidential virtual machine and that is used by the first external device to access the first confidential virtual machine, and the fourth memory is a memory that in the BAR of the first external device and that is used by the first external device to access the first confidential virtual machine.

The first mapping relationship and the second mapping relationship may be mapping relationships between addresses of memories. For example, the first mapping relationship is a mapping relationship between an address of the first memory and an address of the second memory.

It may be understood that passthrough of the first external device to the first confidential virtual machine is mainly related to the following two types of memory access: 1. The first confidential virtual machine accesses (for example, configures, reads/writes) a memory (namely, the BAR) of the first external device, where an initiator is the first confidential virtual machine (or may be a processor running the first confidential virtual machine), and a responder is the first external device. 2. The first external device performs DMA read/write on the memory (which may also be referred to as a DMA memory and belongs to a host memory) of the first confidential virtual machine, for example, the first external device is a network interface card, and after receiving a packet whose destination address is the first confidential virtual machine, the network interface card needs to send the packet to the first confidential virtual machine, where an initiator is the network interface card, a responder is the DMA memory in the first confidential virtual machine for DMA read/write of the network interface card, without participation of a CPU.

In this application, the processor establishes the first mapping relationship on the TEE side, so that when the first confidential virtual machine needs to access the first external device, the first confidential virtual machine can gain access to the second memory by accessing the first memory, where gaining access to the second memory is gaining access to the first external device. The processor establishes the second mapping relationship on the TEE side, so that when the first external device needs to access the first confidential virtual machine, the first external device can gain access to the third memory by accessing the fourth memory, where gaining access to the third memory is gaining access to the first confidential virtual machine. It can be learned that based on the first mapping relationship and the second mapping relationship, when accessing each other, the first confidential virtual machine and the first external device can access each other as if the first confidential virtual machine and the first external device access own memories

In a specific implementation, the first mapping relationship may be established by the processor by using an MMIO technology. In this case, the first memory is usually referred to as an MMIO memory. The second mapping relationship may be established by the processor by using an SMMU. In this case, the third memory is usually referred to as the DMA memory. For a process in which the processor establishes the first mapping relationship by using the MMIO technology and establishes the second mapping relationship by using the SMMU, refer to related descriptions of the MMIO and the SMMU in the conventional technology. For brevity of the specification, details are not described herein.

In a possible embodiment, as shown in FIG. 5, PCIe topology at the hardware layer of the computing device 300 includes a root complex. The root complex is a bridge for communication between the processor of the computing device 300 and the external device. In other words, when the processor communicates with the external device, communication data is forwarded by the root complex. For example, in a process in which the processor configures, on the TEE side, passthrough of the first external device to the first confidential virtual machine, the processor needs to configure, on the TEE side, the BAR of the first external device. In this case, communication data in the configuration process is forwarded by the root complex. For another example, after the processor configures passthrough of the first external device to the first confidential virtual machine, the processor runs the first confidential virtual machine to communicate with the first external device. In this case, passthrough data between the first confidential virtual machine and the first external device is also forwarded by the root complex.

To avoid a security risk on the first external device because an attacker accesses (configures or reads/writes), when the host operating system kernel on the REE side is cracked by the attacker, the first external device (for example, accesses the BAR of the first external device) by controlling the host operating system kernel, in a specific embodiment of this application, in addition to forwarding the communication data between the processor and the first external device, the root complex further has the following function: When the processor is on the REE side, the root complex disallows the processor to access the first external device.

In a specific implementation, the root complex may receive a third instruction (instructing to configure to disallow, when the processor is on the REE side, the processor to access the first external device) sent by the processor, and execute the third instruction for configuration. Subsequently, when receiving an access request sent by the processor for the first external device, the root complex may determine whether the processor accesses the first external device in a secure manner (for example, the processor is on the TEE side or a basic input/output system (basic input/output system, BIOS)). When determining that the processor performs access in the secure manner, the root complex allows the processor to access the first external device. Otherwise, the root complex rejects the processor to access the first external device.

To prevent the first confidential virtual machine from being accessed by an untrusted external device other than the first external device and protect security of the first confidential virtual machine, in a specific embodiment of this application, the root complex may further have the following function: The root complex may mark the first external device as a secure device, and an external device that is not marked is considered as a non-secure device by default. After marking the first external device as the secure device, if receiving a packet related to the first confidential virtual machine sent by an external device (for example, the first external device), the root complex may determine, based on marking information, whether the external device is the secure device. If determining that the external device is the secure device, the root complex sends the packet to the first confidential virtual machine. Otherwise, the root complex rejects sending the packet to the first confidential virtual machine.

In a specific implementation, the root complex may receive a second instruction (instructing to mark the first external device as the secure device) sent by the processor, and execute the second instruction for marking.

Further, an implementation in which the root complex marks the first external device as the secure device according to the second instruction and performs secure device determining when receiving the packet sent by the external device may be as follows: The second instruction sent by the processor carries the device identifier (for example, the stream ID of the first external device) of the first external device, and after receiving the second instruction, the root complex marks the first external device as the secure device based on the device identifier of the first external device in the second instruction. Subsequently, when receiving, from the first external device, a first packet (carrying a first identifier, where the first identifier indicates that the first external device is the secure device) related to the first confidential virtual machine, the root complex determines, based on the first identifier carried in the first packet, that the first external device is the secure device, and then sends the first packet to the first confidential virtual machine. When receiving, from another external device (an external device not marked as the secure device by the root complex), a packet (not carrying the first identifier or carrying a second identifier, where the second identifier indicates that the external device is the non-secure device) related to the first confidential virtual machine, the root complex may determine, based on that the packet does not carry the first identifier or carries the second identifier, that the external device is the non-secure device, and then rejects sending the packet to the first confidential virtual machine.

Further, an implementation in which the root complex marks the first external device as the secure device based on the device identifier of the first external device in the second instruction may be the following Manner ① or Manner ②.

Manner ①: After receiving the second instruction, the root complex stores the device identifier of the first external device. In this manner, if the root complex stores the corresponding identifier, the external device is considered as the secure device marked by the root complex. If the root complex does not store the corresponding identifier, the external device is considered as the non-secure device marked by the root complex.

Subsequently, when receiving, from the first external device, the first packet (carrying the first identifier, where the first identifier is the device identifier of the first external device) related to the first confidential virtual machine, the root complex may determine, based on the device identifier of the first external device carried in the first packet and the device identifier of the first external device stored in the root complex, that the first external device is the secure device, and then send the first packet to the first confidential virtual machine. When receiving, from the another external device (the external device that is not marked as the secure device by the root complex), a packet (carrying a device identifier of the another external device) related to the first confidential virtual machine, the root complex may determine, based on the device identifier of the another external device carried in the packet, that the external device is the non-secure device, and then reject sending the packet to the first confidential virtual machine.

Manner ②: After receiving the second instruction, the root complex positions the first external device based on the device identifier of the first external device, and then sends a marking instruction to the first external device, to instruct the first external device to mark the first external device as the secure device in a local register. In this manner, when the external device that marks the external device as the secure device in the local register sends a packet to the first confidential virtual machine, the packet carries the first identifier indicating that the external device is the secure device. When an external device that does not mark the external device as the secure device in the local register sends a packet to the first confidential virtual machine, the packet does not carry the first identifier, or the packet carries the second identifier.

Subsequently, when receiving, from the first external device, the first packet related to the first confidential virtual machine, the root complex may determine, based on the first identifier carried in the first packet, that the first external device is the secure device, and then send the first packet to the first confidential virtual machine. However, when sending the packet to the first confidential virtual machine, the another external device that is not marked as the secure device does not carry the first identifier or carries the second identifier. When receiving, from the external device, the packet related to the first confidential virtual machine, the root complex may determine, based on that the packet does not carry the first identifier or based on the second identifier carried in the packet, that the external device is the non-secure device, and then rejects sending the packet to the first confidential virtual machine.

For example, in a specific implementation, when the external device sends the packet to the first confidential virtual machine, the sent packet includes a security identifier (security ID) field. If the external device is marked as the secure device, the security identifier field in the packet carries the first identifier, for example, 0. If the external device is not marked as the secure device, the security identifier field in the packet is empty or carries the second identifier, for example, 1.

It should be understood that Manner ① and Manner ② are merely examples, and should not be considered as specific limitations on an implementation in which root complex marks the first external device as the secure device and performs secure device determining when receiving the packet sent by the external device.

In a more specific embodiment, as shown in FIG. 5, the root complex includes a protection controller (protection controller), and the above described operation performed by the root complex may be implemented by the protection controller in the root complex.

In a possible embodiment, as shown in FIG. 5, in addition to the first confidential virtual machine, the TEE side of the computing device 300 may further include the secure virtual machine management program that manages the first confidential virtual machine. The secure virtual machine management program may run on the SEL 2 layer on the TEE side.

In the computing device 300 shown in FIG. 5, the operation performed by the processor of the computing device 300 on the TEE side in this specification may be implemented by running the secure virtual machine management program by the processor. For example, the above described operation of configuring, by the processor on the TEE side, passthrough of the first external device to the first confidential virtual machine and a below described operation of creating, by the processor on the TEE side, the first confidential virtual machine both may be implemented by running the secure virtual machine management program by the processor.

In a possible embodiment, as shown in FIG. 5, the REE side of the computing device 300 may further include a VFIO driver, and the above described operation performed by the processor of the computing device 300 on the REE side may be implemented by running the VFIO driver on the REE side by the processor.

In a possible embodiment, as shown in FIG. 5, the VFIO driver includes a vifo_iommu module and a vfio_pci module, the secure virtual machine management program includes a trust IO management (trust input/output management) module, and the trust IO management module includes an MMIO module and an SMMU module.

The vifo_iommu module is an encapsulation of an IOMMU driver, and is configured to provide an IOMMU function for the first confidential virtual machine, that is, provide the first external device with a capability of accessing the first confidential virtual machine, for example, a capability of performing DMA read/write on the first confidential virtual machine.

Specifically, the vifo_iommu module may send an instruction to the SMMU module, so that the SMMU module executes the instruction, to provide the first external device with the capability of accessing the first confidential virtual machine.

The vfio_pci module is an encapsulation of a device (device) driver, and is configured to provide the first confidential virtual machine with a capability of accessing the first external device, for example, a capability of reading and writing the first external device.

Specifically, the vfio_pci module may send an instruction to the MMIO module, so that the MMIO module executes the instruction, to provide the first confidential virtual machine with the capability of accessing the first external device.

In a specific implementation, the vfio_pci module may further send the second instruction and the third instruction to the MMIO module, so that the MMIO module performs corresponding configuration according to the second instruction and the third instruction.

It should be noted that the trust IO management module may also be referred to as another module, for example, a management module or a first module. The MMIO module may also be referred to as another module, for example, a first submodule. The SMMU module may also be referred to as another module, for example, an IOMMU module or a second submodule. Names of the modules are not specifically limited in this application.

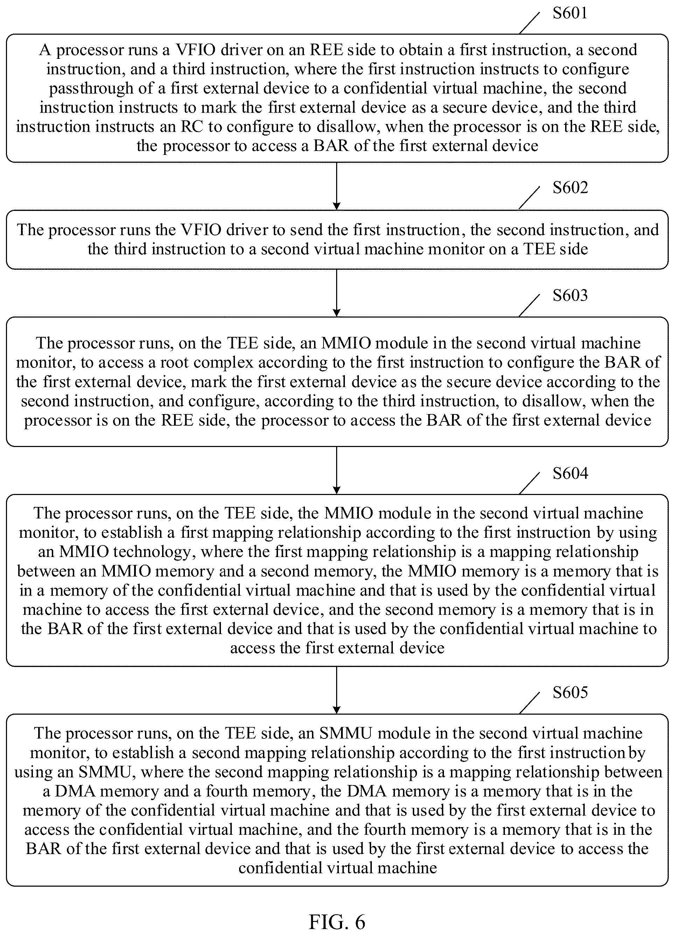

With reference to a flowchart shown in FIG. 6, the following describes in detail a process in which the computing device 300 shown in FIG. 5 configures passthrough of the external device to the first confidential virtual machine.

S601: The processor runs the VFIO driver on the REE side to obtain the first instruction, the second instruction, and the third instruction, where the first instruction instructs to configure passthrough of the first external device to the first confidential virtual machine, the second instruction instructs to mark the first external device as the secure device, and the third instruction instructs to configure to disallow, when the processor is on the REE side, the processor to access the BAR of the first external device.

S602: The processor runs the VFIO driver to send the first instruction, the second instruction, and the third instruction to the secure virtual machine management program on the TEE side.

S603: The processor runs, on the TEE side, the MMIO module in the secure virtual machine management program, to access the root complex according to the first instruction to configure the BAR of the first external device, mark the first external device as the secure device according to the second instruction, and configure, according to the third instruction, to disallow, when the processor is on the REE side, the processor to access the BAR of the first external device.

Specifically, the protection controller in the root complex may execute the second instruction to mark the first external device as the secure device, and execute the third instruction to configure to disallow, when the processor is on the REE side, the processor to access the BAR of the first external device.

S604: The processor runs, on the TEE side, the MMIO module in the secure virtual machine management program, to establish the first mapping relationship according to the first instruction by using the MMIO technology, where the first mapping relationship is a mapping relationship between an MMIO memory and the second memory, the MMIO memory is the memory that is in the memory of the first confidential virtual machine and that is used by the first confidential virtual machine to access the first external device, and the second memory is the memory that is in the BAR of the first external device and that is used by the first confidential virtual machine to access the first external device.

S605: The processor runs, on the TEE side, the SMMU module in the secure virtual machine management program, to establish the second mapping relationship according to the first instruction by using the SMMU, where the second mapping relationship is a mapping relationship between a DMA memory and the fourth memory, the DMA memory is the memory that is in the memory of the first confidential virtual machine and that is used by the first external device to access the first confidential virtual machine, and the fourth memory is the memory that is in the BAR of the first external device and that is used by the first external device to access the first confidential virtual machine.

In the foregoing steps S601 to S605, passthrough of the first external device to the first confidential virtual machine is implemented, and subsequently, the first external device and the first confidential virtual machine may perform secure communication based on the first mapping relationship and the second mapping relationship.

In a specific implementation, the communication data between the first external device and the first confidential virtual machine may be forwarded by the secure virtual machine management program on the TEE side, without passing through the REE side. This can prevent the communication data from being accessed by software, for example, (the host operating system kernel), on the REE side during transmission. Even if the software on the REE side is cracked by the attacker, the communication data between the first PCIe and the first confidential virtual machine cannot be stolen. This ensures security of the communication data during transmission.

It may be understood that before the computing device 300 performs the method for passthrough of the external device to the virtual machine shown in FIG. 4, the first confidential virtual machine needs to be created on the TEE side. In this application, the processor of the computing device 300 may obtain configuration information of the first confidential virtual machine to be created on the REE side, and then create the first confidential virtual machine on the TEE side based on the configuration information of the first confidential virtual machine. The configuration information includes a specification of the first confidential virtual machine to be created, for example, a size of a storage, a type of the storage, a size of a memory, a type of the memory, a type of a processor core, a quantity of processor cores, a computing speed of the processor core, a quantity of cores of the processor core, network bandwidth, an operating system kernel, and a file system (file system). When creating the first confidential virtual machine, the processor may provide, for the first confidential virtual machine based on the configuration information, virtual hardware resources that match the configuration information. For example, the processor divides, in a memory resource on the TEE side based on memory information included in the configuration information, a secure memory that matches the memory information and that is used by the first confidential virtual machine, simulates, based on processor core information included in the configuration information, a virtual processor core that matches the processor core information and that is used by the first confidential virtual machine, and loads, into the secure memory corresponding to the first confidential virtual machine, an operating system kernel and a file system that are included in the configuration information. In this way, the first confidential virtual machine is created.

In a possible embodiment, the processor of the computing device 300 may run the normal virtual machine management program on the REE side to obtain the configuration information of the first confidential virtual machine to be created, and then run the secure virtual machine management program on the TEE side to create the first confidential virtual machine based on the configuration information of the first confidential virtual machine.

It should be noted that, in addition to the foregoing operations, the processor of the computing device 300 may further perform other operations, for example, creating, modifying, and destroying a level-2 page table on the REE side/a level-2 page table on the TEE side. An operation that can be performed by the processor of the computing device 300 is not specifically limited in this application.

### (2) Second method for passthrough of the external device to the virtual machine

As shown in FIG. 7A, the method includes steps S701 to S704.

S701: The secure virtual machine management program receives a device passthrough request sent by a device passthrough management module in a normal world, where the device passthrough request is used to configure passthrough of a first external device to a first confidential virtual machine, and the device passthrough request carries a device identifier of the first external device and an identifier of the first confidential virtual machine.

The first confidential virtual machine may be any one of confidential virtual machines on the TEE side.

The identifier of the first confidential virtual machine may be an ID of the first confidential virtual machine, or the like, and is used to position the first confidential virtual machine.

The first external device may be one or more of the external devices such as a GPU, an NPU, a TPU, a network interface card, a graphics card, and a sound card. The first external device is not specifically limited in this application.

The device identifier of the first external device may be a bus device function (bus device function, BDF) number of the first external device, or the like, and is used to position the first external device.

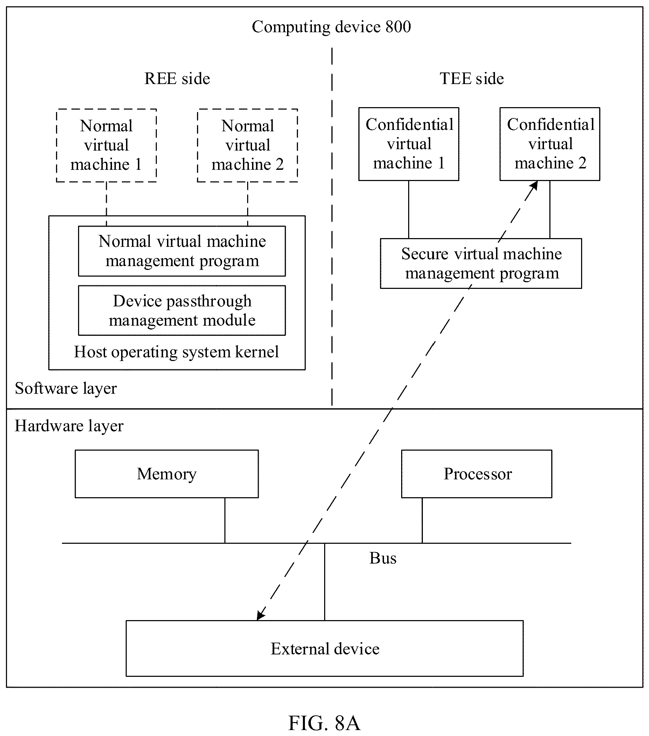

The following describes the secure virtual machine management program and the device passthrough management module with reference to another computing device 800 provided in this application and shown in FIG. 8A.

It can be seen from the computing device 300 shown in FIG. 3 that a difference between the computing device 800 shown in FIG. 8A and the computing device 300 shown in FIG. 3 lies only in that the REE side of the computing device 800 includes the device passthrough management module and the TEE side includes the secure virtual machine management program. The following describes only the difference between the computing device 800 and the computing device 300 shown in FIG. 3. For a same part of the two computing devices, refer to related descriptions in FIG. 3. For brevity of the specification, details are not described herein again.

The secure virtual machine management program has been described in FIG. 3. For details, refer to related descriptions in FIG. 3.

The device passthrough management module may run on the EL 2 layer on the REE side. In a possible embodiment, as shown in FIG. 8A, the device passthrough management module is deployed in the host operating system kernel running on the EL 2 layer. It should be noted that the device passthrough management module may also be referred to as a passthrough management module, a passthrough module, a device passthrough module, or the like. A name of the module is not specifically limited in this application.

The device passthrough management module is a bridge for interaction between the secure virtual machine management program and a user. In S701, a process in which the secure virtual machine management program receives the device passthrough request sent by the device passthrough management module may be as follows: The device passthrough management module reads, from a non-secure memory on the REE side, the device passthrough request input by the user into the computing device 800, and sends the device passthrough request to the secure virtual machine management program.

In a specific implementation, a manner in which the user inputs the device passthrough request into the computing device 800 includes but is not limited to the following several manners.

Manner (1): The user may input the device passthrough request through a command-line interface (command-line interface, CLI) provided by the computing device 800.

Manner (2): The user may input the device passthrough request through an application programming interface (application programming interface, API) provided by the computing device 800.

Manner (3): The computing device 800 provides a graphical user interface (graphical user interface, GUI) for the user. The GUI may display a passthrough configuration control and an input interface of a device identifier of an external device and an identifier of the confidential virtual machine. The user may input the device identifier of the first external device and input the identifier of the first confidential virtual machine through the input interface, and then click the passthrough configuration control, to input the device passthrough request.

S702: The secure virtual machine management program configures, based on the device passthrough request, passthrough of the first external device to the first confidential virtual machine.

It may be understood that passthrough of the first external device to the first confidential virtual machine may relate to communication in the following two directions: Direction 1: The first confidential virtual machine accesses the first external device, where an initiator is the first confidential virtual machine, and a responder is the first external device. Direction 2: The first external device accesses the first confidential virtual machine, where an initiator is the first external device, and a responder is the first confidential virtual machine. Therefore, when configuring passthrough of the first external device to the first confidential virtual machine, the secure virtual machine management program needs to perform configuration, so that the first external device and the first confidential virtual machine can perform communication.

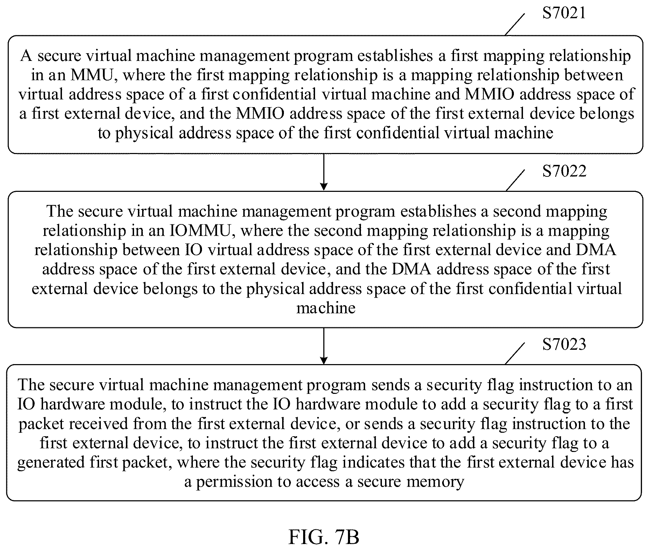

Specifically, S702 may be implemented by using steps S7021 to S7023 shown in FIG. 7B, to perform configuration, so that the first external device and the first confidential virtual machine can perform communication.

S7021: The secure virtual machine management program establishes a first mapping relationship in an MMU, where the first mapping relationship is a mapping relationship between virtual address space of the first confidential virtual machine and MMIO address space of the first external device, and the MMIO address space of the first external device belongs to physical address space of the first confidential virtual machine.

The MMIO address space of the first external device may be carried in the device passthrough request.

The physical address space of the first confidential virtual machine is memory space occupied by the first confidential virtual machine, and the memory space belongs to a secure memory.

The first mapping relationship is established in the MMU, so that the first confidential virtual machine can access the first external device based on the first mapping relationship when the first confidential virtual machine needs to access the first external device.

S7022: The secure virtual machine management program establishes a second mapping relationship in an IOMMU, where the second mapping relationship is a mapping relationship between IO virtual address space of the first external device and DMA address space of the first external device, and the DMA address space of the first external device belongs to physical address space of the first confidential virtual machine.

The DMA address space of the first external device may be carried in the device passthrough request.

The second mapping relationship is established in the IOMMU, so that the first external device can access the first confidential virtual machine based on the second mapping relationship when the first external device needs to access the first confidential virtual machine.

In a possible embodiment, before establishing the first mapping relationship in the MMU and establishing the second mapping relationship in the IOMMU, the secure virtual machine management program may check validity of a configuration parameter (for example, the device identifier, the MMIO address space, and the DMA address space of the first external device) that is carried in the device passthrough request and that is used to configure passthrough of the first external device to the first confidential virtual machine. If determining that the configuration parameter is valid, the secure virtual machine management program establishes the first mapping relationship and the second mapping relationship. If determining that the configuration parameter is invalid, the secure virtual machine management program does not establish the first mapping relationship and the second mapping relationship, and reminds the user. This can avoid a case in which the first confidential virtual machine and the first external device cannot perform normal communication subsequently because an incorrect mapping relationship is established.

For example, the secure virtual machine management program checks whether the device identifier of the first external device carried in the device passthrough request exists in device identifiers of a plurality of external devices connected to the computing device 800 that are recorded in secure firmware of the computing device 800. When determining that the device identifier of the first external device carried in the device passthrough request exists in the device identifiers of the plurality of external devices that are recorded in the secure firmware, the secure virtual machine management program checks whether MMIO address space that corresponds to the device identifier of the first external device and that is recorded in the secure firmware is the same as the MMIO address space carried in the device passthrough request. When determining that the MMIO address space that corresponds to the device identifier of the first peripheral device is the same as the MMIO address space carried in the device passthrough request, the secure virtual machine management program determines that both the device identifier and the MMIO address space of the first external device that are carried in the device passthrough request are valid, and then the secure virtual machine management program establishes the first mapping relationship in the MMU based on the MMIO address space carried in the device passthrough request. When determining that the device identifier of the first external device carried in the device passthrough request does not exist in the device identifiers of the plurality of external devices that are recorded in the secure firmware, the secure virtual machine management program determines that the device identifier of the first external device carried in the device passthrough request is invalid, does not establish the first mapping relationship in the MMU, and reminds the user that the device identifier of the first peripheral device is invalid. When determining that the device identifier of the first external device carried in the device passthrough request exists in the device identifiers of the plurality of external devices that are recorded in the secure firmware, but detecting that the MMIO address space that corresponds to the device identifier of the first peripheral device and that is recorded in the secure firmware is different from the MMIO address space carried in the device passthrough request, the secure virtual machine management program determines that the device identifier of the first external device carried in the device passthrough request is valid but the carried MMIO address space is invalid, does not establish the first mapping relationship in the MMU, and reminds the user that the MMIO address space is invalid.

For another example, the secure virtual machine management program checks whether the DMA address space carried in the device passthrough request belongs to the physical address space of the first confidential virtual machine. When determining that the DMA address space carried in the device passthrough request belongs to the physical address space of the first confidential virtual machine, the secure virtual machine management program determines that the DMA address space carried in the device passthrough request is valid, and then the secure virtual machine management program establishes the second mapping relationship in the IOMMU based on the DMA address space carried in the device passthrough request. When determining that the DMA address space carried in the device passthrough request does not belong to the physical address space of the first confidential virtual machine, the secure virtual machine management program determines that the DMA address space carried in the device passthrough request is invalid, does not establish the second mapping relationship in the IOMMU, and reminds the user that the DMA address space is invalid.

S7023: The secure virtual machine management program sends a security flag instruction to an IO hardware module, to instruct the IO hardware module to add a security flag to a first packet received from the first external device, or sends a security flag instruction to the first external device, to instruct the first external device to add a security flag to a generated first packet, where the security flag indicates that the first external device has a permission to access the secure memory.

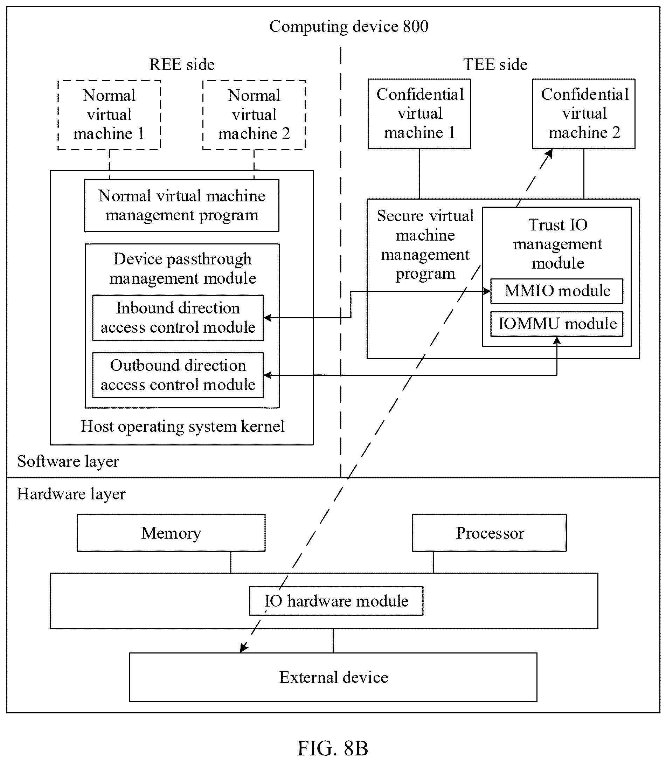

The IO hardware module is deployed at a hardware layer of the computing device 800, as shown in FIG. 8B. The IO hardware module is a bridge for communication between the computing device 800 and the external device. In other words, when the computing device 800 communicates with the external device, the IO hardware module forwards communication data. For example, after configuration of passthrough of the first external device to the first confidential virtual machine is completed, communication data between the first confidential virtual machine running on the computing device 800 and the first external device is forwarded by the IO hardware module. It should be noted that the IO hardware module may also be referred to as a protection controller (protection controller), an external device protection controller, or the like. A name of the hardware module is not specifically limited in this application. In a possible embodiment, when the external device communicates with the processor by using the PCIe protocol, the IO hardware module may be integrated into the root complex.

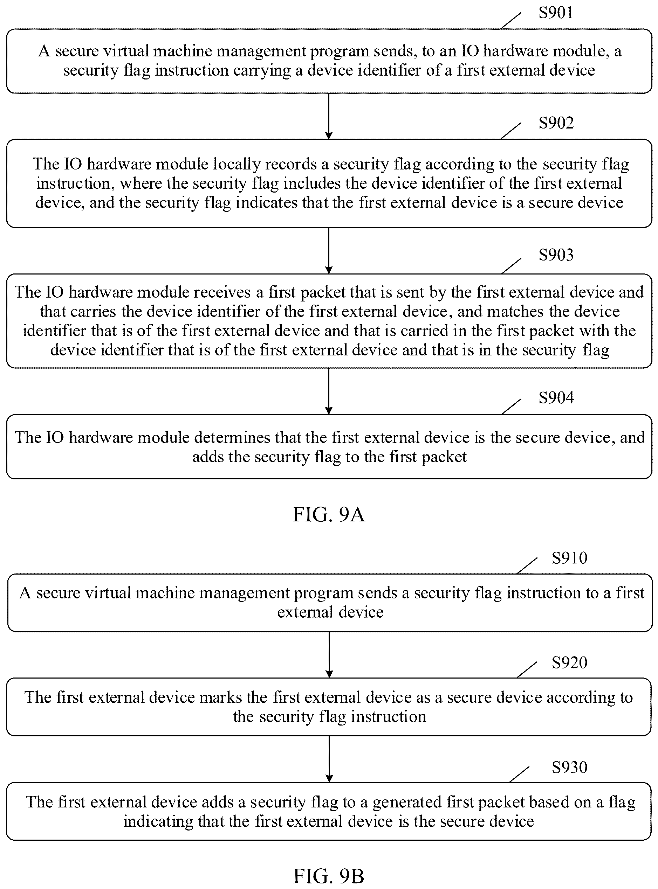

The following describes in detail a specific implementation process of S7023.
(1) A specific implementation process in which the secure virtual machine management program sends the security flag instruction to the IO hardware module, to instruct the IO hardware module to add the security flag to the first packet received from the first external device may include steps S901 to S904 shown in FIG. 9A.

S901: The secure virtual machine management program sends, to the IO hardware module, the security flag instruction carrying the device identifier of the first external device.

S902: The IO hardware module locally records the security flag according to the security flag instruction, where the security flag includes the device identifier of the first external device, and the security flag indicates that the first external device is a secure device.

The secure device may also be referred to as a confidential device or a trusted device.

S903: The IO hardware module receives the first packet that is sent by the first external device and that carries the device identifier of the first external device, matches the device identifier that is of the first external device and that is carried in the first packet with the device identifier that is of the first external device and that is in the security flag, and performs S904 when determining that the two device identifiers are the same.

S904: The IO hardware module determines that the first external device is the secure device, and adds the security flag to the first packet.

After adding the security flag to the first packet, the IO hardware module sends the first packet to the IOMMU.

In this application, if receiving a second packet from a second external device (which is an external device that is not marked as secure in the IO hardware module, namely, a non-secure external device), the IO hardware module may match a device identifier of the second external device carried in the second packet with the device identifier in the locally recorded security flag, determine that the locally recorded security flag does not include the device identifier of the second external device, and therefore determine the second external device as a non-secure device. Then, the IO hardware module adds a non-security flag to the second packet, and sends the second packet to the IOMMU.

When receiving the first packet carrying the security flag, the IOMMU may determine, based on the security flag carried in the first packet, that the first external device can access the non-secure memory on the REE side and the secure memory on the TEE side. Then, the IOMMU queries a locally configured first page table according to a destination address (belonging to the IO virtual address space of the first external device) carried in the first packet, where the page table includes mapping relationships (for example, the first mapping relationship and the second mapping relationship, where the MMIO address space is the secure memory in the first mapping relationship, and the DMA address space is the secure memory in the second mapping relationship) of the secure memories on the TEE side and mapping relationships of the non-secure memories on the REE side. The IOMMU queries the first page table to determine whether memory space mapped to the destination address exists in the non-secure memory on the REE side/the secure memory on the TEE side. If determining that the memory space mapped to the destination address exists, the IOMMU forwards the first packet to the memory space mapped to the destination address. Otherwise, the IOMMU does not forward the first packet.

When receiving the second packet carrying the non-security flag, the IOMMU may determine, based on the non-security flag carried in the second packet, that the second external device can access the non-secure memory on the REE side and cannot access the secure memory on the TEE side. Then, the IOMMU queries a locally configured second page table according to a destination address (belonging to the IO virtual address space of the second external device) carried in the second packet, where the page table includes a mapping relationship of the non-secure memory on the REE side. The IOMMU queries the second page table to determine whether memory space mapped to the destination address exists in the non-secure memory on the REE side. If determining that the memory space mapped to the destination address exists, the IOMMU forwards the second packet to the memory space mapped to the destination address. Otherwise, the IOMMU does not forward the second packet.

In a specific implementation, a specific implementation in which the IO hardware module adds the security flag/non-security flag to the packet may be as follows: The IO hardware module adds a security flag (security ID) field (for example, a flag bit (NS bit)) to the packet and adds a value (value) of the security flag field. If the value of the added security flag field is 0, it indicates that the security flag is added. If the value of the added security flag field is 1, it indicates that the non-security flag is added.

Optionally, values corresponding to the security flag and the non-security flag may be alternatively other values. This is not specifically limited in this application. For example, if the value of the added security flag field is 00, it indicates that the security flag is added. If the value of the added security flag field is 01, it indicates that the non-security flag is added.

It can be learned that because the packet from the non-secure external device (namely, the second external device) carries the non-security flag, after receiving the packet from the non-secure external device, the IOMMU determines, based on the non-security flag carried in the packet, that the non-secure external device cannot access the secure memory on the TEE side. This can protect security of resources on the TEE side.

(2) A specific implementation process in which the secure virtual machine management program sends the security flag instruction to the first external device, to instruct the first external device to add the security flag to the generated first packet may include steps S910 to S930 shown in FIG. 9B.

S910: The secure virtual machine management program sends the security flag instruction to the first external device.

S920: The first external device marks the first external device as the secure device according to the security flag instruction.

S930: The first external device adds the security flag to the generated first packet based on the flag indicating that the first external device is the secure device.

After adding the security flag to the generated first packet, the first external device sends the first packet to the IOMMU.

In this application because the second external device (which is an external device that does not mark the external device as the secure device, namely, a non-secure external device) does not mark the second external device as the secure device, the second external device adds the non-security flag to the second packet generated by the second external device, and sends the second packet to the IOMMU.

For subsequent operations performed by the IOMMU on the first packet/the second packet after the first packet carrying the security flag is received/the second packet carrying the non-security flag is received are described in detail in content of FIG. 9A. For details, refer to related descriptions in FIG. 9A. For brevity of the specification, details are not described herein again.

In a specific implementation, a specific implementation in which the external device adds the security flag/non-security flag to the packet may be as follows: The external device adds a security flag (security ID) field (for example, a flag bit (NS bit)) to the packet and adds a value (value) of the security flag field. If the value of the added security flag field is 0, it indicates that the security flag is added. If the value of the added security flag field is 1, it indicates that the non-security flag is added.

Optionally, values corresponding to the security flag and the non-security flag may be alternatively other values. This is not specifically limited in this application. For example, if the value of the added security flag field is 00, it indicates that the security flag is added. If the value of the added security flag field is 01, it indicates that the non-security flag is added.

It can be learned that because the packet from the non-secure external device (namely, the second external device) carries the non-security flag, after receiving the packet from the non-secure external device, the IOMMU determines, based on the non-security flag carried in the packet, that the non-secure external device cannot access the secure memory on the TEE side. This can protect security of resources on the TEE side.

It can be learned from the foregoing descriptions of FIG. 7B, FIG. 9A, and FIG. 9B that the secure virtual machine management program establishes the first mapping relationship in the MMU, so that when the first confidential virtual machine needs to access the first external device (for example, needs to deliver an instruction or data to the first external device), after receiving a packet from the first confidential virtual machine, the MMU determines, based on the first mapping relationship, that the first confidential virtual machine can access the first external device, and then forwards, to the first external device, the packet from the first confidential virtual machine, to implement access of the first confidential virtual machine to the first external device. It can also be learned that the secure virtual machine management program establishes the second mapping relationship in the IOMMU and sends the security flag instruction to the IO hardware module, to instruct the IO hardware module to add the security flag to the first packet received from the first external device, or sends the security flag instruction to the first external device, to instruct the first external device to add the security flag to the generated first packet, so that when the first external device needs to access the first confidential virtual machine (for example, needs to return data to the first confidential virtual machine), after receiving the first packet from the first external device, the IOMMU determines, based on the second mapping relationship and the security flag in the first packet, that the first external device can access the first confidential virtual machine, and forwards, to the first confidential virtual machine, the packet from the first external device, to implement access of the first external device to the first confidential virtual machine.

It may be understood that the MMIO address space of the first external device and the DMA address space of the first external device both belong to the memory of the first confidential virtual machine, and the memory of the first confidential virtual machine belongs to the secure memory on the TEE side. Therefore, the MMIO address space of the first external device and the DMA address space of the first external device both are protected by a hardware security feature of a TEE. Even if the host operating system kernel is cracked by an attacker, the attacker cannot access the MMIO address space of the first external device and the DMA address space of the first external device by using the host operating system kernel. That the attacker cannot access the MMIO address space of the first external device means that the attacker cannot access the first external device. This avoids attacking the first external device by the attacker, and protects security of the first external device and security of data (for example, data received from the first confidential virtual machine) in the first external device. The attacker cannot access the DMA address space of the first external device. This protects security of data that is from the first external device and that is stored in the DMA address space of the first external device.

In a possible embodiment, the device passthrough request may further carry a fine-grained access permission (for example, a read-only permission, a write permission, or an execute permission) of the first external device on the DMA address space (namely, the DMA address space of the first external device). The secure virtual machine management program may configure, in the IOMMU based on the fine-grained access permission, of the first external device on the DMA address space, carried in the device passthrough request, the fine-grained access permission of the first external device on the DMA address space. Subsequently, when the first external device accesses the DMA address space (namely, accesses the first confidential virtual machine), the IOMMU may control, based on the locally configured fine-grained access permission, access of the first external device to the DMA address space. For example, if the secure virtual machine management program configures, in the IOMMU based on the device passthrough request, only a read-only permission of the first external device on the DMA address space, the IOMMU allows the first external device only to read the DMA address space, and disallows the first external device to perform another operation on the DMA address space.

In a possible embodiment, the device passthrough request may further carry a fine-grained access permission (for example, a read-only permission, a write permission, or an execute permission) of the first confidential virtual machine on the MMIO address space (namely, the MMIO address space of the first external device). The secure virtual machine management program may configure, in the MMU based on the fine-grained access permission, of the first confidential virtual machine on the MMIO address space, carried in the device passthrough request, the fine-grained access permission of the first confidential virtual machine on the MMIO address space. Subsequently, when the first confidential virtual machine accesses the MMIO address space (namely, accesses the first external device), the MMU may control, based on the locally configured fine-grained access permission, access of the first confidential virtual machine to the MMIO address space. For example, if the secure virtual machine management program configures, in the MMU based on the device passthrough request, only a read-only permission of the first confidential virtual machine on the MMIO address space, the MMU allows the first confidential virtual machine only to read the MMIO address space, and disallows the first confidential virtual machine to perform another operation on the MMIO address space.

S703: The secure virtual machine management program sends a notification message to the device passthrough management module, to notify that configuration of passthrough of the first external device to the first confidential virtual machine is completed.

S704: The device passthrough management module notifies the user that configuration of passthrough of the first external device to the first confidential virtual machine is completed.

In a possible embodiment, as shown in FIG. 8B, in addition to the confidential virtual machine, the TEE side of the computing device 800 may further include a trust IO management (trust input/output management) module. The trust IO management module may run on any one of the SEL 0 layer to the SEL 3 layer on the TEE side, and preferably runs on the SEL 2 layer. When running on the SEL 2 layer, the trust IO management module may be integrated into the secure virtual machine management program used to manage the confidential virtual machine, or may be independent of the secure virtual machine management program. This is not specifically limited in this application. In FIG. 8B, an example in which the trust IO management module is integrated into the secure virtual machine management program is used. It should be noted that the trust IO management module may also be referred to as a secure world IO management module, a security management module, a trust IO module, or the like. A name of the module is not specifically limited in this application.

In the computing device 800 shown in FIG. 8B, the steps performed by the secure virtual machine management program in FIG. 7A, FIG. 7B, FIG. 9A, and FIG. 9B may be implemented by the trust IO management module.

In a more specific embodiment, as shown in FIG. 8B, the device passthrough management module includes an inbound (inbound) direction access control module and an outbound (outbound) direction access control module, and the trust IO management module includes an MMIO module and an IOMMU module.

The inbound direction access control module is an encapsulation of an IOMMU driver, and is configured to provide an IOMMU function for the first confidential virtual machine, that is, provide the first confidential virtual machine a capability of being accessed by the first external device.

Specifically, the inbound direction access control module may access the IOMMU module based on the device passthrough request, and indicate the IOMMU module to access the IOMMU, to establish the second mapping relationship in the IOMMU, so that the first external device has a capability of accessing the first confidential virtual machine based on the second mapping relationship.

The outbound direction access control module is an encapsulation of an external device driver, and is configured to provide the first confidential virtual machine a capability of accessing the first external device.

Specifically, the outbound direction access control module may access the MMIO module based on the device passthrough request, and indicate the MMIO module to access the MMU, to establish the first mapping relationship in the MMU, so that the first confidential virtual machine has the capability of accessing the first external device based on the first mapping relationship.

In a possible embodiment, when the computing device 800 implements passthrough of the external device to a user mode based on a VFIO driver framework, the device passthrough management module may be integrated into a VFIO driver.

It should be noted that the MMIO module may also be referred to as an MMIO address space configuration module, an MMIO configuration module, or the like. The IOMMU module may also be referred to as a DMA memory configuration module, an IOMMU configuration module, or the like. The inbound direction access control module may also be referred to as a first access control module, a first direction access control module, an inbound control module, or the like. The outbound direction access control module may also be referred to as a second access control module, a second direction access control module, an outbound control module, or the like. Names of the foregoing modules are not specifically limited in this application.

It should be noted that FIG. 7A is described by using an example in which an interaction process (for example, the secure virtual machine management program obtains the device passthrough request input by the user, or the secure virtual machine management program notifies the user that configuration of passthrough of the first external device to the first confidential virtual machine is completed) between the secure virtual machine management program and the user needs to pass through the device passthrough management module. In a specific implementation, the interaction process between the secure virtual machine management program and the user may not pass through the device passthrough management module. For example, the secure virtual machine management program directly reads, from the non-secure memory on the REE side, the device passthrough request input by the user into the computing device 800, without reading and forwarding by the device passthrough management module. For another example, the secure virtual machine management program directly notifies the user that configuration of passthrough of the first external device to the first confidential virtual machine is completed, without notifying by the device passthrough management module. Therefore, in a possible embodiment, the computing device 800 shown in FIG. 8A may not include the device passthrough management module. This application does not specifically limit the interaction process between the secure virtual machine management program and the user.

In a specific embodiment of this application, after configuration of passthrough of the first external device to the first confidential virtual machine is completed, communication data for communication between the first external device and the first confidential virtual machine is forwarded by the IO hardware module and the secure virtual machine management program, without passing through the REE side. Specifically, data sent by the first external device to the first confidential virtual machine is forwarded by the IO hardware module to the IOMMU, forwarded by the IOMMU to the secure virtual machine management program, and then forwarded by the secure virtual machine management program to the first confidential virtual machine, without passing through the REE side. Data sent by the first confidential virtual machine to the first external device is forwarded by the secure virtual machine management program to the MMU, forwarded by the MMU to the IO hardware module, and then forwarded by the IO hardware module to the first external device, without passing through the REE side. This can prevent the communication data from being accessed by software, for example, (the host operating system kernel), on the REE side during transmission. Even if the software on the REE side is cracked by the attacker, the attacker cannot steal the communication data between the first external device and the first confidential virtual machine. This ensures security of the communication data during transmission.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing describes in detail the method for passthrough of the external device to the virtual machine provided in this application. Based on a same inventive idea, the following continues to describe an apparatus for passthrough of an external device to a virtual machine and a computing device provided in this application.

It should be understood that unit modules in the apparatus for passthrough of the external device to the virtual machine may also be divided in a plurality of manners. The modules may be software modules or may be hardware modules, or a part of the modules may be software modules and the other part of the modules may be hardware modules. This is not limited in this application.

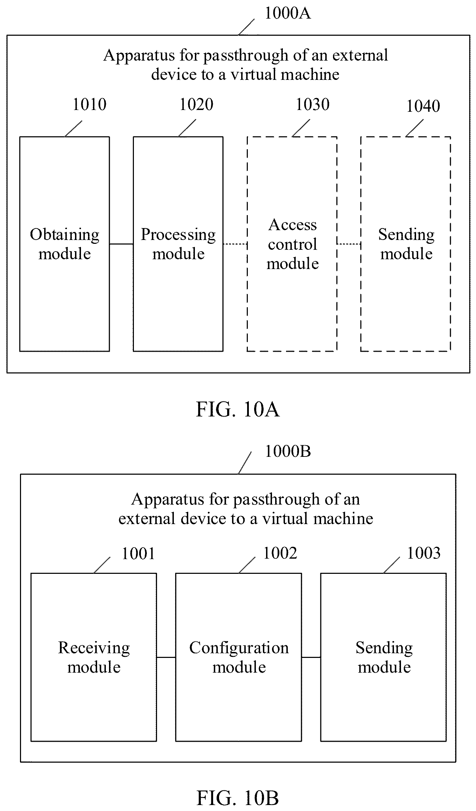

FIG. 10A is a diagram of a structure of an apparatus 1000A for passthrough of an external device to a virtual machine according to an example of this application. The apparatus may be applied to the computing device 300 as shown in FIG. 3 and FIG. 5 in which hardware resources are partitioned into the REE side and the TEE side. As shown in FIG. 10A, the apparatus 1000A includes an obtaining module 1010 and a processing module 1020. The following describes functions of modules of the apparatus 1000A by using examples. It should be understood that the functions of the modules described in the following examples are merely functions that the apparatus 1000A may have in some embodiments of this application, and the functions of the modules are not limited in this application.

The obtaining module 1010 is configured to obtain a first instruction on the REE side, where the first instruction instructs to configure passthrough of a first external device to a confidential virtual machine on the TEE side, and the first external device is any one or more external devices in the computing device 300.

The processing module 1020 is configured to configure, on the TEE side according to the first instruction, passthrough of the first external device to the confidential virtual machine.

In a possible embodiment, the processing module 1020 may implement configuration of passthrough of the first external device to the virtual machine in the following manner: The processing module 1020 configures, on the TEE side, a BAR of the first external device; and then establishes a first mapping relationship and a second mapping relationship, where the first mapping relationship is a mapping relationship between a first memory and a second memory, the first memory is a memory that is in a memory of the virtual machine and that is used by the confidential virtual machine to access the first external device, the second memory is a memory that is in the BAR of the first external device and that is used by the confidential virtual machine to access the first external device, the second mapping relationship is a mapping relationship between a third memory and a fourth memory, the third memory is a memory that is in the memory of the confidential virtual machine and that is used by the first external device to access the confidential virtual machine, and the fourth memory is a memory that is in the BAR of the first external device and that is used by the first external device to access the confidential virtual machine.

In a possible embodiment, as shown in FIG. 10A, the apparatus 1000A further includes an access control module 1030, configured to: when the obtaining module 1010 is on the REE side/the processing module 1020 is on the REE side, disallow the obtaining module 1010/the processing module 1020 to access the first external device.

In a possible embodiment, as shown in FIG. 10A, the apparatus 1000A further includes a sending module 1040. The obtaining module 1010 is configured to obtain a second instruction on the REE side (the second instruction instructs to mark the first external device as a secure device, and the second instruction carries a device identifier of the first external device). The sending module 1040 is configured to send the second instruction to the access control module 1030. The access control module 1030 is further configured to mark the first external device as the secure device based on the device identifier of the first external device in the second instruction, and is configured to receive, from the first external device, a first packet related to the confidential virtual machine (the first packet carries a first identifier, and the first identifier indicates that the first external device is the secure device). The access control module 1030 is further configured to: determine, based on the first identifier carried in the first packet, that the first external device is the secure device, and then send the first packet to the confidential virtual machine.

In a possible embodiment, the first identifier is the device identifier of the first external device, and the access control module 1030 is configured to mark the first external device as the secure device in a root complex of the computing device 300 based on the device identifier of the first external device in the second instruction.

To increase flexibility of the solution, in another possible embodiment, the access control module 1030 is configured to mark the first external device as the secure device in the first external device based on the device identifier of the first external device in the second instruction.

In a possible embodiment, a VFIO driver is deployed on the REE side of the computing device 300, a secure virtual machine management program used to manage the confidential virtual machine is deployed on the TEE side, the obtaining module 1010 and the sending module 1040 are deployed in the VFIO driver, the processing module 1020 is deployed in the secure virtual machine management program, the access control module 1030 is deployed in the root complex of the computing device 300, and the access control module 1030 may be understood as the protection controller shown in FIG. 5.

In a possible embodiment, the access control module 1030 is configured to send the first packet to the confidential virtual machine by using the secure virtual machine management program.

In a possible embodiment, the secure virtual machine management program is further configured to send, to the first external device, a second packet that is related to the first external device and that is received from the confidential virtual machine.

In a possible embodiment, before obtaining the first instruction, the obtaining module 1010 is further configured to obtain, on the REE side, configuration information of the confidential virtual machine to be created; and the processing module 1020 is further configured to create, on the TEE side, the confidential virtual machine based on the configuration information.

In a possible embodiment, the first external device includes any one or more of the following: a GPU, an NPU, a network interface card, a graphics card, and a sound card. It should be understood that the first external device may further include another type of external device. This is not specifically limited in this application.

Specifically, for specific implementations of various operations performed by the apparatus 1000A, refer to the descriptions in the related content in the method embodiments of the external device and the confidential virtual machine shown in FIG. 4 and FIG. 6. For brevity of the specification, details are not described herein again.

FIG. 10B is a diagram of a structure of another apparatus 1000B for passthrough of an external device to a virtual machine according to an example of this application. The apparatus may be the secure virtual machine management program or the trust IO management module described in embodiments in FIG. 7A to FIG. 9B. As shown in FIG. 10B, the apparatus 1000B may include a receiving module 1001, a configuration module 1002, and a sending module 1003. The following describes functions of modules of the apparatus 1000B by using examples. It should be understood that the functions of the modules described in the following examples are merely functions that the apparatus 1000B may have in some embodiments of this application, and the functions of the modules are not limited in this application.

The receiving module 1001 is configured to receive a device passthrough request, where the device passthrough request is used to configure passthrough of a first external device to a first confidential virtual machine, and the device passthrough request carries a device identifier of the first external device and an identifier of the first confidential virtual machine.

The configuration module 1002 is configured to configure passthrough of the first external device to the first confidential virtual machine based on the device passthrough request.

In some possible embodiments, the receiving module 1001 is configured to receive the device passthrough request sent by a device passthrough management module, where the device passthrough management module runs in a normal world; and the sending module 1003 is configured to send a notification message to the device passthrough management module, to notify that configuration of passthrough of the first external device to the first confidential virtual machine is completed.

In some possible embodiments, the configuration module 1002 is specifically configured to:
establish a first mapping relationship in an MMU and establish a second mapping relationship in an IOMMU, where the first mapping relationship is a mapping relationship between virtual address space of the first confidential virtual machine and MMIO address space of the first external device, the second mapping relationship is a mapping relationship between IO virtual address space of the first external device and DMA address space of the first external device, and both the MMIO address space and the DMA address space of the first external device belong to physical address space of the first confidential virtual machine; and
send a security flag instruction to an IO hardware module, to instruct the IO hardware module to add a security flag to a packet received from the first external device, or send, by the secure virtual machine management program, a security flag instruction to the first external device, to instruct the first external device to add a security flag to a generated packet, where the security flag indicates that the first external device has a permission to access a secure memory.

In some possible embodiments, when a computing device to which the first confidential virtual machine belongs includes an RC, the IO hardware module is integrated into the RC.

In some possible embodiments, the device identifier of the first external device is a BDF number.

In some possible embodiments, the first external device is a GPU, an NPU, a TPU, a network interface card, or a hard disk.

In some possible embodiments, the apparatus 1000B is applied to the computing device (for example, the computing device 800 shown in FIG. 8A and FIG. 8B) in which hardware resources are partitioned into an REE side and a TEE side, and the first confidential virtual machine is located on the TEE side.

Specifically, for specific implementations of various operations performed by the apparatus 1000B, refer to the descriptions of the operations performed by the secure virtual machine management program/trust IO management module in the methods for passthrough of the external device to the virtual machine shown in FIG. 7A to FIG. 9B. For brevity of the specification, details are not described herein again.

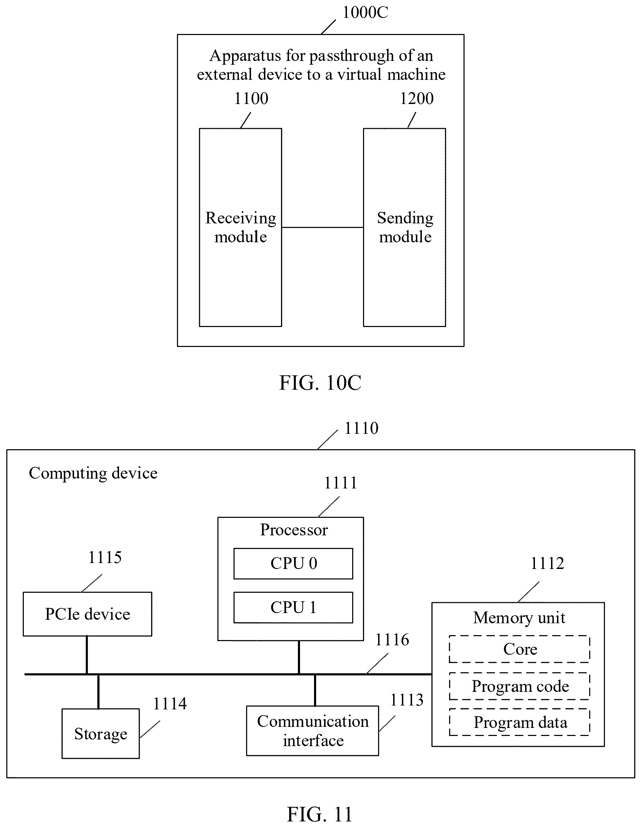

FIG. 10C is a diagram of a structure of another apparatus 1000C for passthrough of an external device to a virtual machine according to an example of this application. The apparatus may be the device passthrough management module described in embodiments in FIG. 7A to FIG. 9B. As shown in FIG. 10C, the apparatus 1000C may include a receiving module 1100 and a sending module 1200. The following describes functions of modules of the apparatus 1000C by using examples. It should be understood that the functions of the modules described in the following examples are merely functions that the apparatus 1000C may have in some embodiments of this application, and the functions of the modules are not limited in this application.

The sending module 1200 is configured to send a device passthrough request to a secure virtual machine management program, where the device passthrough request is used to configure passthrough of a first external device to a first confidential virtual machine, and the device passthrough request carries a device identifier of the first external device and an identifier of the first confidential virtual machine.

The receiving module 1100 is configured to receive a notification message sent by the secure virtual machine management program, where the notification message indicates that configuration of passthrough of the first external device to the first confidential virtual machine is completed.

Specifically, for specific implementations of various operations performed by the apparatus 1000C, refer to the descriptions of the operations performed by the device passthrough management module in the methods for passthrough of the external device to the virtual machine shown in FIG. 7A to FIG. 9B. For brevity of the specification, details are not described herein again.

FIG. 11 is a diagram of a structure of another computing device 1110 according to this application. The computing device includes a processor 1111, a memory unit 1112, a communication interface 1113, a storage 1114, an input device 1115, and an output device 1116. The processor 1111, the memory unit 1112, the communication interface 1113, the storage 1114, and the external device 1115 may be connected to each other through a bus 1116. The processor 1111 may read program code (including instructions) stored in the memory unit 1112, and execute the program code stored in the memory unit 1112, so that the computing device 300 performs the steps in the method for passthrough of the external device to the confidential virtual machine.

The processor 1111 may have a plurality of specific implementations. For example, the processor 1111 may be at least one CPU, as shown in FIG. 11, including a CPU 0 and a CPU 1. The processor 1111 may alternatively be a GPU or the like. The processor 1111 may alternatively be a single-core processor or a multi-core processor. The processor 1111 may be a combination of a CPU and a hardware chip. The hardware chip may be implemented by using an application-specific integrated circuit (application-specific integrated circuit, ASIC) or a programmable logic device (programmable logic device, PLD). The PLD may be implemented by a complex programmable logic device (complex programmable logic device, CPLD), a field-programmable gate array (field-programmable gate array, FPGA), generic array logic (generic array logic, GAL), or any combination thereof. The processor 1111 may alternatively be implemented independently by using a logic device with built-in processing logic, for example, an FPGA or a digital signal processor (digital signal processor, DSP).

The memory unit 1112 is configured to store a kernel, program code, and program data generated when the processor 1111 executes the program code stored in the memory unit 1112. The program code includes code of the obtaining module 1010 and code of the processing module 1020 shown in FIG. 10A, and the program data includes the first instruction, the second instruction, the configuration information of the confidential virtual machine to be created, and the like. Alternatively, the program code includes code of the receiving module 1001, code of the configuration module 1002, and code of the sending module 1003 shown in FIG. 10B, and the program data includes the device passthrough request, the notification message indicating that configuration of passthrough of the first external device to the first confidential virtual machine is completed, and the like. Alternatively, the program code includes code of the receiving module 1100 and code of the sending module 1200 shown in FIG. 10C, and the program data includes the device passthrough request, the notification message indicating that configuration of passthrough of the first external device to the first confidential virtual machine is completed, and the like.

The communication interface 1113 may be a wired interface (for example, an Ethernet interface, an optical fiber interface, or an interface of another type (for example, an infiniBand (infiniBand, IB) interface)) or a wireless interface (for example, a cellular network interface or a wireless local area network interface), and is configured to communicate with another computing device or apparatus. When the communication interface 1113 is the wired interface, the communication interface 1113 may use a transmission control protocol/internet protocol (transmission control protocol/internet protocol, TCP/IP) suite, for example, a remote function call (remote function call, RFC) protocol, a simple object access protocol (simple object access protocol, SOAP) protocol, a simple network management protocol (simple network management protocol, SNMP) protocol, a common object request broker architecture (common object request broker architecture, CORBA) protocol, and a distributed protocol.

The storage 1114 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The storage 1114 may alternatively be a volatile memory. The volatile memory may be a random access memory (random access memory, RAM), and is used as an external cache.

The external device 1115 may include a graphics card, a network interface card, a sound card, an acceleration device (for example, a GPU or an NPU), a disk, and the like.

The bus 1116 may be a PCIe bus or the like. The bus 1116 may be classified into an address bus, a data bus, a control bus, and the like. For ease of representation, only one bold line is used to represent the bus in FIG. 11, but this does not mean that there is only one bus or only one type of bus.

It should be understood that the computing device in this embodiment of this application may correspond to the computing device including the apparatus 1000A, 1000B, or 1000C in embodiments of this application, and may correspond to the corresponding entity that performs the methods shown in FIG. 4, FIG. 6, FIG. 7A, FIG. 7B, FIG. 9A, and FIG. 9B in embodiments of this application. In addition, operations and/or functions of the modules in the computing device are separately used to implement corresponding procedures of the methods shown in FIG. 4, FIG. 6, FIG. 7A, FIG. 7B, FIG. 9A, and FIG. 9B. For brevity, details are not described herein again.

It should be understood that the computing device 300 is merely an example provided in embodiments of this application. In addition, the computing device 300 may have more or fewer components than those shown in FIG. 11, may combine two or more components, or may have different component configurations.

This application further provides a computer-readable storage medium. The computer-readable storage medium stores instructions. When the instructions are run, a part or all of the steps of the method for passthrough of the external device to the virtual machine recorded in the foregoing embodiments may be implemented.

This application further provides a computer program product. When the computer program product is read and executed by a computer, a part or all of the steps of the method for passthrough of the external device to the virtual machine recorded in the foregoing method embodiments may be implemented.

In the foregoing embodiments, the description of each embodiment has respective focuses. For a part that is not described in detail in an embodiment, reference may be made to related descriptions in other embodiments.

All or some of the foregoing embodiments may be implemented by using software, hardware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A method for passthrough of a high-speed serial computer extended bus standard PCIe device to a virtual machine, applied to a computing device, wherein hardware resources of the computing device are partitioned into a rich execution environment REE side and a trusted execution environment TEE side, the computing device comprises a first PCIe device, the TEE side comprises the virtual machine, and the method comprises:
obtaining, by a processor of the computing device, a first instruction on the REE side, wherein the first instruction instructs to configure passthrough of the first PCIe device to the virtual machine; and
configuring, by the processor on the TEE side, passthrough of the first PCIe device to the virtual machine according to the first instruction.

2. The method according to claim 1, wherein configuring, by the processor on the TEE side, passthrough of the first PCIe device to the virtual machine comprises:
configuring, by the processor on the TEE side, a base address register BAR of the first PCIe device;
establishing, by the processor, a first mapping relationship on the TEE side, wherein the first mapping relationship is a mapping relationship between the first memory and a second memory, the first memory is a memory that is in a memory of the virtual machine and that is used by the virtual machine to access the first PCIe device, and the second memory is a memory that is in the BAR of the first PCIe device and that is used by the virtual machine to access the first PCIe device; and
establishing, by the processor, a second mapping relationship on the TEE side, wherein the second mapping relationship is a mapping relationship between a third memory and a fourth memory, the third memory is a memory that is in the memory of the virtual machine and that is used by the first PCIe device to access the virtual machine, and the fourth memory is a memory that is in the BAR of the first PCIe device and that is used by the first PCIe device to access the virtual machine.

3. The method according to claim 1 or 2, wherein the computing device comprises a root complex RC, and the method further comprises:
when the processor is on the REE side, disallowing, by the RC, the processor to access the first PCIe device.

4. The method according to any one of claims 1 to 3, wherein the method further comprises:
obtaining, by the processor, a second instruction on the REE side, wherein the second instruction instructs to mark the first PCIe device as a secure device, and the second instruction carries an identifier of the first PCIe device;
sending, by the processor, the second instruction to the RC in the computing device;
marking, by the RC, the first PCIe device as the secure device based on the identifier of the first PCIe device in the second instruction;
receiving, by the RC from the first PCIe device, a first packet related to the virtual machine, wherein the first packet carries a first identifier, and the first identifier indicates that the first PCIe device is the secure device;
determining, by the RC based on the first identifier in the first packet, that the first PCIe device is the secure device; and
sending, by the RC, the first packet to the virtual machine.

5. The method according to claim 4, wherein the first identifier is the identifier of the first PCIe device, and marking, by the RC, the first PCIe device as the secure device based on the identifier of the first PCIe device in the second instruction comprises:
marking, by the RC, the first PCIe device as the secure device in the RC based on the identifier of the first PCIe device in the second instruction.

6. The method according to claim 4, wherein marking, by the RC, the first PCIe device as the secure device based on the identifier of the first PCIe device in the second instruction comprises:
marking, by the RC, the first PCIe device as the secure device in the first PCIe device based on the identifier of the first PCIe device in the second instruction.

7. The method according to any one of claims 1 to 6, wherein a virtual function input/output VFIO driver is deployed on the REE side, and a virtual machine monitor configured to manage the virtual machine is deployed on the TEE side; and
an operation performed by the processor on the REE side is performed by the processor by running the VFIO driver, and an operation performed by the processor on the TEE side is performed by the processor by running the virtual machine monitor.

8. The method according to claim 7, wherein sending, by the RC, the first packet to the virtual machine comprises:
sending, by the RC, the first packet to the virtual machine via the virtual machine monitor; and
the method further comprises:
running, by the processor, the virtual machine monitor to send, to the first PCIe device, a second packet that is related to the first PCIe device and that is received from the virtual machine.

9. The method according to any one of claims 1 to 8, wherein before obtaining, by the processor, the first instruction on the REE side, the method further comprises:
obtaining, by the processor on the REE side, configuration information of the virtual machine to be created; and
creating, by the processor on the TEE side, the virtual machine based on the configuration information.

10. The method according to any one of claims 1 to 9, wherein the first PCIe device comprises any one or more of the following: a graphics processing unit GPU, an embedded neural network processing unit NPU, a network interface card, a graphics card, and a sound card.

11. A method for passthrough of an external device to a virtual machine, wherein the method comprises:
receiving, by a secure virtual machine management program, a device passthrough request, wherein the device passthrough request is used to configure passthrough of a first external device to a first confidential virtual machine, and the device passthrough request carries a device identifier of the first external device and an identifier of the first confidential virtual machine; and
configuring, by the secure virtual machine management program, passthrough of the first external device to the first confidential virtual machine based on the device passthrough request.

12. The method according to claim 11, wherein receiving, by the secure virtual machine management program, the device passthrough request comprises:
receiving, by the secure virtual machine management program, the device passthrough request sent by a device passthrough management module, wherein the device passthrough management module runs in a normal world; and
after configuring, by the secure virtual machine management program, passthrough of the first external device to the first confidential virtual machine, the method further comprises:
sending, by the secure virtual machine management program, a notification message to the device passthrough management module, to notify that configuration of passthrough of the first external device to the first confidential virtual machine is completed.

13. The method according to claim 11 or 12, wherein configuring, by the secure virtual machine management program, passthrough of the first external device to the first confidential virtual machine comprises:
establishing, by the secure virtual machine management program, a first mapping relationship in a memory management unit MMU and establishing a second mapping relationship in an input/output memory management unit IOMMU, wherein the first mapping relationship is a mapping relationship between virtual address space of the first confidential virtual machine and memory-mapped input/output MMIO address space of the first external device, the second mapping relationship is a mapping relationship between IO virtual address space of the first external device and direct memory access DMA address space of the first external device, and both the MMIO address space and the DMA address space belong to physical address space of the first confidential virtual machine; and
sending, by the secure virtual machine management program, a security flag instruction to an IO hardware module, to instruct the IO hardware module to add a security flag to a packet received from the first external device, or sending, by the secure virtual machine management program, a security flag instruction to the first external device, to instruct the first external device to add a security flag to a generated packet, wherein the security flag indicates that the first external device has a permission to access a secure memory.

14. The method according to claim 13, wherein when a computing device to which the first confidential virtual machine belongs comprises a root complex RC, the IO hardware module is integrated into the RC.

15. The method according to any one of claims 11 to 14, wherein the device identifier of the first external device is a bus-device-function BDF number.

16. The method according to any one of claims 11 to 15, wherein the secure virtual machine management program comprises a trust IO management module, and an operation performed by the secure virtual machine management program is performed by the trust IO management module.

17. The method according to any one of claims 11 to 16, wherein the first external device is a GPU, an NPU, a tensor processing unit TPU, a network interface card, or a hard disk.

18. The method according to any one of claims 11 to 17, wherein the method is applied to the computing device whose hardware resources are partitioned into an REE side and a TEE side, and the first confidential virtual machine is located on the TEE side.

19. A method for passthrough of an external device to a virtual machine, wherein the method comprises:
sending, by a device passthrough management module, a device passthrough request to a secure virtual machine management program, wherein the device passthrough management module runs in a normal world, the device passthrough request is used to configure passthrough of a first external device to a first confidential virtual machine, and the device passthrough request carries a device identifier of the first external device and an identifier of the first confidential virtual machine; and
receiving, by the device passthrough management module, a notification message sent by the secure virtual machine management program, wherein the notification message indicates that configuration of passthrough of the first external device to the first confidential virtual machine is completed.

20. The method according to claim 19, wherein the device identifier of the first external device is a BDF number.

21. The method according to claim 19 or 20, wherein the first external device is a GPU, an NPU, a TPU, a network interface card, or a hard disk.

22. The method according to any one of claims 19 to 21, wherein the method is applied to a computing device whose hardware resources are partitioned into an REE side and a TEE side, and the first confidential virtual machine is located on the TEE side.

23. An apparatus for passthrough of an external device to a virtual machine, wherein the apparatus comprises:
a receiving module, configured to receive a device passthrough request, wherein the device passthrough request is used to configure passthrough of a first external device to a first confidential virtual machine, and the device passthrough request carries a device identifier of the first external device and an identifier of the first confidential virtual machine; and
a configuration module, configured to configure passthrough of the first external device to the first confidential virtual machine based on the device passthrough request.

24. The apparatus according to claim 23, wherein the apparatus further comprises a sending module; and
the receiving module is configured to receive the device passthrough request sent by a device passthrough management module, wherein the device passthrough management module runs in a normal world; and
the sending module is configured to send a notification message to the device passthrough management module, to notify that configuration of passthrough of the first external device to the first confidential virtual machine is completed.

25. The apparatus according to claim 23 or 24, wherein the configuration module is specifically configured to:
establish a first mapping relationship in an MMU and establish a second mapping relationship in an IOMMU, wherein the first mapping relationship is a mapping relationship between virtual address space of the first confidential virtual machine and MMIO address space of the first external device, the second mapping relationship is a mapping relationship between IO virtual address space of the first external device and DMA address space of the first external device, and both the MMIO address space and the DMA address space belong to physical address space of the first confidential virtual machine; and
send a security flag instruction to an IO hardware module, to instruct the IO hardware module to add a security flag to a packet received from the first external device, or send, by the secure virtual machine management program, a security flag instruction to the first external device, to instruct the first external device to add a security flag to a generated packet, wherein the security flag indicates that the first external device has a permission to access a secure memory.

26. The apparatus according to claim 25, wherein when a computing device to which the first confidential virtual machine belongs comprises an RC, the IO hardware module is integrated into the RC.

27. The apparatus according to any one of claims 23 to 26, wherein the device identifier of the first external device is a BDF number.

28. The apparatus according to any one of claims 23 to 27, wherein the apparatus further comprises a trust IO management module, and an operation performed by the apparatus is performed by the trust IO management module.

29. The apparatus according to any one of claims 23 to 28, wherein the first external device is a GPU, an NPU, a TPU, a network interface card, or a hard disk.

30. The apparatus according to any one of claims 23 to 29, wherein the apparatus is applied to the computing device whose hardware resources are partitioned into an REE side and a TEE side, and the first confidential virtual machine is located on the TEE side.

31. An apparatus for passthrough of an external device to a virtual machine, wherein the apparatus comprises:
a sending module, configured to send a device passthrough request to a secure virtual machine management program, wherein the device passthrough management module runs in a normal world, the device passthrough request is used to configure passthrough of a first external device to a first confidential virtual machine, and the device passthrough request carries a device identifier of the first external device and an identifier of the first confidential virtual machine; and
a receiving module, configured to receive a notification message sent by the secure virtual machine management program, wherein the notification message indicates that configuration of passthrough of the first external device to the first confidential virtual machine is completed.

32. The apparatus according to claim 31, wherein the device identifier of the first external device is a BDF number.

33. The apparatus according to claim 31 or 32, wherein the first external device is a GPU, an NPU, a TPU, a network interface card, or a hard disk.

34. The apparatus according to any one of claims 31 to 33, wherein the apparatus is applied to a computing device whose hardware resources are partitioned into an REE side and a TEE side, and the first confidential virtual machine is located on the TEE side.

35. A computing device, wherein the computing device comprises a processor and a storage, and the processor of the computing device is configured to execute instructions stored in the storage of the computing device, to enable the computing device to perform the method according to any one of claims 1 to 22.

36. A computer-readable storage medium, comprising computer program instructions, wherein when the computer program instructions are executed by a computing device, the computing device performs the method according to any one of claims 1 to 22.
